(19) Europäisches Patentamt / European Patent Office / Office européen des brevets

(11) **EP 3 171 201 B1**

(12) **EUROPÄISCHE PATENTSCHRIFT**

(45) Veröffentlichungstag und Bekanntmachung des Hinweises auf die Patenterteilung:
**09.05.2018  Patentblatt 2018/19**

(51) Int Cl.:
**G01S 17/10** (2006.01)    **G01C 3/08** (2006.01)
**G01S 7/484** (2006.01)    **G01S 7/486** (2006.01)

(21) Anmeldenummer: **16167907.1**

(22) Anmeldetag: **07.03.2012**

(54) **ENTFERNUNGSMESSER**

DISTANCE SENSOR

TELEMETRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.05.2017  Patentblatt 2017/21**

(62) Dokumentnummer(n) der früheren Anmeldung(en) nach Art. 76 EPÜ:
**12158382.7 / 2 637 038**

(73) Patentinhaber: **Safran Vectronix AG 9435 Heerbrugg (CH)**

(72) Erfinder:
• **GIACOTTO, Luca CH-9434 Au (CH)**
• **TINIVELLA, Riccardo CH-9442 Berneck (CH)**

(74) Vertreter: **Kaminski Harmann Patentanwälte AG Landstrasse 124 9490 Vaduz (LI)**

(56) Entgegenhaltungen:
**EP-A2- 0 747 725       EP-A2- 1 291 673 WO-A1-2011/076907   US-A1- 2002 131 034 US-A1- 2009 273 770   US-B1- 6 310 682**

EP 3 171 201 B1

**Beschreibung**

Die Erfindung betrifft einen Entfernungsmesser nach dem Oberbegriff des Anspruchs 1 sowie ein Entfernungsmessverfahren nach dem Oberbegriff des Anspruchs 9.

Bei elektrooptischen Distanzmessern (EDM) wird ein optisches Signal vom Gerät in Richtung des Zielobjekts ausgesendet, dessen Distanz es zu bestimmen gilt, beispielsweise als optische Strahlung in Form von Laserlicht. Wird dabei sichtbares Licht verwendet, so ist der zur Vermessung angezielte Punkt auf dem Zielobjekt visuell erkennbar. Werden hingegen nicht sichtbare Wellenlängen, z.B. im Infrarotbereich verwendet oder ist das Zielobjekt weiter entfernt, so kann die Anzielung des zu vermessenden Punktes mittels einer optischen Einrichtung, beispielsweise mit einem Fadenkreuz in einer Beobachtungseinrichtung, durchgeführt werden.

Die Oberfläche des Zielobjekts wirft zumindest einen Teil des optischen Signals zurück, meist in Form einer diffusen Reflektion. Die zurückgeworfene optische Strahlung wird im Gerät von einem photosensitiven Detektorelement in ein elektrisches Empfangssignal umgewandelt. Unter Kenntnis der Ausbreitungsgeschwindigkeit des optischen Signals und anhand der ermittelten Laufzeit zwischen Aussenden und Empfangen des Signals (also jener Laufzeit, welche vom Licht für das Zurücklegen der Entfernung vom Gerät zum Zielobjekt und retour benötigt wird) kann die Distanz zwischen Gerät und Zielobjekt bestimmt werden. Meist befinden sich dabei im optischen Sende- bzw. Empfangspfad optische Komponenten zur Strahlformung, Umlenkung, Filterung, etc. - wie etwa Linsen, Wellenlängenfilter, Spiegel usw. Das Aussenden und Empfangen kann dabei koaxial oder über zwei benachbarte Optiken erfolgen. Derartige Distanz- oder Entfernungsmesser können als eigenständige Geräte ausgebildet sein, können aber auch in andere Geräte integriert sein, zum Beispiel in Vermessungsgeräte wie Theodoliten oder Tachymeter, oder in Beobachtungsgeräte wie Fernrohre, Monokulare, Binokulare, Nachtsichtgeräte, etc.

Zur Kompensation von Einflüssen, welche die Messergebnisse verfälschen könnten (beispielsweise Temperatureinflüsse, Bauteiltoleranzen, Driften von elektronischen Komponenten, etc.), kann ein Teil des ausgesendeten optischen Signals als Referenzsignal über eine Referenzstrecke bekannter Länge von der Lichtquelle zu einem lichtempfindlichen Empfangselement geführt werden. Die Referenzstrecke kann dabei fix im Gerät eingebaut sein oder beispielsweise als ein einschwenkbares oder aufsteckbares optisches Umlenkelement ausgebildet sein. Das von diesem Referenzsignal resultierende Empfangssignal kann von dem auch zur Messung verwendeten oder von einem weiteren, eigens für das Referenzsignal vorgesehenen, photosensitiven Element empfangen werden. Das resultierende elektrische Referenzsignal kann zur Referenzierung und/oder Kalibrierung der ermittelten Messwerte herangezogen werden.

Um eine entsprechend hohe Genauigkeit der Distanzmessung zu erzielen, sind aufgrund der hohen Ausbreitungsgeschwindigkeit von optischer Strahlung die Anforderungen an das zeitliche Auflösungsvermögen bei elektrooptischen Distanzmessern (EDM) recht hoch. Beispielsweise ist für eine Distanzauflösung von 1m eine Zeitauflösung mit einer Genauigkeit von etwa 6,6 Nanosekunden erforderlich.

Für die Messung sind hinreichend starke, vom Empfänger detektierbare, Signalintensitäten des zurückkommenden Empfangssignals erforderlich. Die emittierbare Signalleistung des Sendesignals der hier behandelten optoelektronischen EDM ist jedoch durch physikalische und regulatorische Limiten beschränkt. Vielfach wird daher im Pulsbetrieb gearbeitet. Das ausgesendete optische Signal ist also in seiner Intensitätsamplitude impulsartig moduliert. Es werden zeitlich kurze Pulse, mit hoher Spitzenleistung ausgesendet, gefolgt von Pausen in denen keine Lichtemission stattfindet. Somit weist der zurückgeworfene Anteil der Pulse eine genügend hohe Intensität auf, um diese aus den Hintergrundstörungen und dem Rauschen, insbesondere auch bei Vorhandensein von Hintergrundlicht (Sonnenlicht, künstlicher Beleuchtung, etc.), auswerten zu können. Die Anzahl der Pulse pro Paket kann je nach Auswertekonzept und Messsituation von Einzelpulsen bis hin zu einer quasikontinuierlichen Pulsfolge variiert werden.

Zur Ermittlung der Laufzeit des Signals ist zum einen die so genannte Time-of-Flight (TOF) Methode bekannt, welche die Zeit zwischen dem Aussenden und Empfangen eines Lichtpulses ermittelt, wobei die Zeitmessung anhand der Flanke, dem Spitzenwert oder einer anderen Charakteristik der Pulsform erfolgt. Unter Pulsform ist dabei ein zeitlicher Lichtintensitätsverlauf des Empfangssignals, speziell des empfangenen Lichtpulses - erfasst durch das photosensitive Element - zu verstehen. Der Zeitpunkt des Sendens kann entweder anhand eines elektrischen Impulses zur Auslösung der Emission, anhand des an den Sender angelegten Ansteuersignals oder anhand eines oben erwähnten Referenzsignals ermittelt werden.

Zum anderen ist das sogenannte Phasenmessprinzip bekannt, welches die Signallaufzeit durch Vergleich der Phasenlage der Amplitudenmodulation des gesendeten und empfangenen Signals ermittelt. Dabei hat das Messergebnis bei einer Sendefrequenz aber Mehrdeutigkeiten in Einheiten der Sendefrequenzperiodendauer, sodass weitere Maßnahmen zur Auflösung dieser Mehrdeutigkeiten erforderlich sind. Beispielsweise zeigt WO 2006/063740 ein Messen mit mehreren Signalfrequenzen, welche in unterschiedlichen Eindeutigkeitsbereichen resultieren, wodurch falsche Lösungen ausgeschlossen werden können. Auch WO 2007/022927 behandelt Eindeutigkeiten in der Phasenmessung.

Bei einer mathematischen Betrachtung der Grundlagen der Distanzmessverfahren lässt sich eine Abhängigkeit der erzielbaren Distanzmessgenauigkeit von den emittierten Lichtpulsen zeigen. Wie beispielsweise im Buch "Electro-Optical Instrumentation - Sensing and Measuring with Lasers" von Silvano Donati, in Kapitel 3.2.3 dargelegt, lässt sich zeigen, dass die Messgenauigkeit von der Empfangssignalenergie (also von der Anzahl der empfangenen Photonen) abhängt. Die in diesem Abschnitt des Buchs beschriebene Ausführungsform der Distanzermittlung anhand eines Schwellenwerts der Empfangssignalflanke ist dabei exemplarisch und lediglich als ein anschauliches Beispiel anzusehen. Die zugrunde liegenden Prinzipien und deren Ergebnisse sind in analoger Weise auch auf andere Auswerteverfahren zur Distanzermittlung durch Laufzeitbestimmung von Lichtpulsen anwendbar.

Speziell zeigt die Gleichung 3.16,

$$\sigma_t = \tau \cdot (Faktor) \text{ ,}$$

dass die Zeitdauer des Impulses $\tau$ bei der Bestimmung des erzielbaren Messfehlers $\sigma_t$ einen Einfluss hat, insbesondere einen im wesentlichen linearen Einfluss, skaliert mit einem Faktor, welcher verschiedenste andere Einflussgrössen zusammenfasst. Dieses grundsätzliche Ergebnis bleibt auch gültig, wenn der zur Auswertung der Distanz verwendete Algorithmus variiert wird, speziell da die physikalischen Grundlagen der Messung dieselben bleiben. Das Ergebnis ist auch weitgehend unabhängig von der empfangenen Signalform.

Da sich somit die Messungenauigkeiten in einer ersten Annäherung linear mit einer zeitlichen Verkürzung der verwendeten Pulse verbessert, lässt sich mit kürzeren Pulsen eine höhere Messgenauigkeit erzielen.

Die Intensität des empfangenen, vom Zielobjekt zurückgeworfenen Anteils des ausgesendeten Lichts hängt von verschiedenen Faktoren ab und kann daher auch stark variieren. Als Einflussgröße ist hierbei die Distanz zum Zielobjekt zu nennen, mit welcher sich die Aufweitung des ausgesendeten Messlichtstrahls vergrößert, und auch die Signalabschwächung durch atmosphärische Störungen wie Dunst, Nebel, Hitzeflimmern oder Staub aufgrund des längeren Weges zunehmen. Bei Entfernungsmessern sind dabei oft große Reichweitenbereiche gefordert, beispielsweise vom dm- bis zum km-Bereich. Bei Beobachtungsgeräten mit Entfernungsmessern (etwa Nachtsichtgeräte, Zielfernrohre, Teleskope, Binokulare, etc.) sind oftmals Reichweiten von einigen Metern bis hin zu vielen Kilometern, etwa von 5m bis zu 20km oder 30km, gefordert und dieses bei einer Messgenauigkeit von einigen Metern oder gar darunter, beispielsweise von ±1m bis ±5m oder weniger.

Ein wesentlicher Faktor ist dabei das Signal-Rausch-Verhältniss (SNR - eng. Signal to Noise Ratio) der zur Distanzbestimmung herangezogenen Information. Das erzielte SNR ist unter anderem auch eines der Hauptkriterien bezüglich der erzielbaren maximalen Messdistanz.

Ist das empfangene Signal zu schwach, so kann es nicht mehr eindeutig aus dem Hintergrundrauschen oder dem Umgebungslicht erkannt werden. Aufgrund des schlechten Signal-Rausch-Verhältnisses ist nur eine ungenaue oder schlimmstenfalls gar keine Distanzmessung möglich. Um eine Messung durchführen zu können, muss das SNR einen gewissen Mindestlevel überschreiten, bei welchen das Signal aus dem Rauschen erkennbar und somit eine Messung überhaupt durchführbar ist. Insbesondere durch statistische Verfahren, Mittelungen, etc. kann dieses durchaus auch schon bei niedrigen effektiven SNR eines einzelnen, empfangenen Pulses möglich sein. Bei einer wiederholten Folge von kurzen Pulsen und einem Summieren bzw. Mitteln der sich dabei ergebenden Messsignale ist ein höheres SNR erzielbar. Die dabei durchgeführte statistische Mittelung kann durch Ausmittelung von nichtdeterministischen Fehlereinflüssen, wie etwa Rauschen, eine Verbesserung des SNR bewirken. Eine numerische Mittelung mehrerer Messungen nach der A/D-Wandlung kann zudem eine Erweiterung der signifikanten Stellen der digitalen Empfangssignaldarstellung bewirken. Beispielsweise kann durch eine phasenrichtige Akkumulation mehrerer Empfangspulse eine Messung auch schon bei SNR-Werten der Einzelpulse unter 1 möglich sein. Bei N Empfangspulsen ergibt sich dabei eine Verbesserung des Signal-Rausch-Verhältnisses (SNR) um etwa den Faktor $\sqrt{N}$, wobei dieser Effekt nicht auf eine beliebige Anzahl N erweitert werden kann, sondern ab einer gewissen Anzahl von Pulsen eine Sättigung der Verbesserung eintritt.

Ein SNR über eine Mindestschwelle hinweg ist eine Grundanforderung, um eine Messung überhaupt durchführen zu können. Eine weitere Erhörung über diese Mindestschwelle hinaus erlaubt eine höhere Messgenauigkeit, höhere Zuverlässigkeit der Messung oder kürzere Messdauern (beispielsweise, da weniger Signale akkumuliert werden müssen um ein auswertbares Signal zu erhalten). Jedoch nehmen auch die zuvor genannten Verbesserungen ab einem gewissen SNR-Level ab und wirken sich auf das Messergebnis nur mehr marginal aus, beispielsweise da andere limitierende Effekte überwiegen.

Der Rauschterm N wird dabei primär vom Signalübertragungsweg, also von der Messstrecke, welche das Licht durchläuft, von äußeren Störeinflüssen, wie Umgebungslicht und (zumeist wesentlich) vom Rauschen in der elektronischen Empfangsschaltung, gebildet. N ist dabei auch abhängig von den Umgebungsbedingungen wie Temperatur, etc., welche als gegeben hingenommen werden müssen. Insbesondere bei Geräten mit Entfernungsmesser für den Feldeinsatz sind oftmals Temperaturbereiche von beispielsweise -20 bis +60°C oder größer gefordert. Die Empfangsschaltung wird zwar dahingehend ausgelegt, ein möglichst geringes Rauschen aufzuweisen, gänzlich vermeiden lässt es sich aber nicht.

Auch dem Signalterm S sind Grenzen gesetzt.

Neben der ohne Verwendung von speziell präparierten Zielen unbeeinflussbaren Reflektivität des Ziels für die Messstrahlung nimmt beispielsweise auch die empfangene Intensität des zurückgeworfenen Signals mit zunehmender Messdistanz ab. Eine nachträgliche Anhebung des Signalpegels durch Verstärkung ist zwar möglich, diese bewirkt jedoch auch immer eine Verstärkung des (vor und im Verstärker auftretenden) Rauschens. Auch der hierfür angewandte Verstärker stellt eine zusätzliche Rauschquelle im System dar.

Ein offensichtlicher Ansatz zur Erhöhung der Signalstärke des Empfangssignals ist eine Erhöhung der Signalstärke des Sendesignals. Bei angenommener Linearität der Dämpfung des Signalpfades bezüglich der Signalstärke bewirkt dieses eine lineare Erhöhung des SNR. Somit könnte beispielsweise durch Verdoppelung der Sendeintensität auch (zumindest annähernd) eine Verdoppelung des SNR des Empfangssignals erzielt werden. Der maximal möglichen Sendeintensität sind jedoch Grenzen gesetzt, speziell durch physikalische Limiten, beispielsweise der verwendeten Lichtquelle, der Ansteuerschaltung, der zur Verfügung stehenden Sendeleistung oder Versorgungsleistung, thermischen Grenzen, etc. Speziell unter Beachtung von Randbedingungen wie geringe Baugrösse, Batteriebetrieb, Bauteilkosten, etc., welche speziell bei einem mobilen Entfernungsmesser gegeben sind.

Ist andererseits das empfangene optische Signal in seiner Amplitude zu stark, kann dieses zu einer Sättigung im Empfänger, z.B. des Empfangselements, einer Verstärkerstufe oder eines A/D-Wandlers führen. Durch eine derartige Sättigung wird eine genaue Distanzmessung erschwert oder verunmöglicht. Der Signal-Dynamikbereich der Empfangsschaltung ist also hardwarebedingt beschränkt, was auch den möglichen Bereich des S-Term limitiert. Durch die Einstellung der Pulsamplituden kann beispielsweise auf unterschiedliche Zielobjekt-Reflektivitäten und Signaldämpfungen entlang des Messwegs eingegangen werden.

Das Dokument WO 97/22179 beschreibt eine Schaltungsanordnung einer Impulsendstufe, welche als Treiberstufe zur Speisung einer Lichtquelle und zur Emission von Lichtpulsen angewandt werden kann. Mit dieser Schaltung kann die Amplitude der emittierten Pulse und somit die pro Puls emittierte Energie variiert werden. Die Zeitdauer der erzeugten Pulse ist aber durch den Schaltungsaufbau fix vorgegeben. Auch DE 23 31 084, DE 199 43 127 oder US 3,628,048 zeigen ähnliche Schaltungskonzepte. Die Zeitdauern der Pulse ändern sich dabei allenfalls als Nebenprodukt der Amplitudenänderung, etwa durch sich ändernde Signalflankensteigungen oder Signalflankenhöhen.

Dem Variationsbereich der Sendepulsamplitude sind dabei aber auch mit einer solchen Impulsendstufe Grenzen gesetzt. Zum einen gilt es die zuvor erläuterte Sättigung des Empfängers zu vermeiden. Wenn beispielsweise ein konstanter Strahlungsanteil als Referenzsignal über einen Referenzpfad vom Sender direkt auf den Empfänger gekoppelt wird, muss die zulässige Amplitudendynamik des Senders auf jene des Referenzempfängers angepasst sein. Auch die Strahlungsquelle bzw. deren Ansteuerschaltung kann ein limitierender Faktor des maximal möglichen Pulsamplitudenwerts sein.

Ein weiterer bekannter Ansatzpunkt zur Verbesserung des SNR ist eine Ausfilterung des unerwünschten Rauschanteils gegenüber dem Messsignal. Speziell wird dabei die Bandbreite (BW) des empfangenen Signals auf jene des Nutzsignals angepasst, also z.B. hochfrequentes oder niederfrequentes Rauschen sowie andere Störsignale über digitale und/oder analoge Filter ausgefiltert. Dabei kann das SNR etwa um den Faktor $\sqrt{BW}$ verbessert werden. Auch hier sind der praktischen Realisierbarkeit Grenzen gesetzt, da steile Filter von hoher Güte und hoher Linearität in Amplitude und Phase praktisch nur schwer realisierbar sind. Beispielsweise gilt es durch hinreichend gute Einhaltung des Nyquist-Kriteriums, bei der Digitalisierung Aliasing-Effekte zu vermeiden. Speziell analoge Filter mit entsprechenden Kennwerten stellen eine schaltungstechnische Herausforderung dar. Eine alternative digitale Filterung erfordert hingegen die Verwendung von entsprechend höheren Abtastraten und ist daher ebenfalls schaltungstechnisch aufwändig und kostenintensiv.

Eine zu starke Begrenzung der Bandbreite wirkt sich dabei aber negativ auf die Messgenauigkeit aus, da mit der Beschneidung der hochfrequenten Anteile auch Signalinformation verloren geht. Dieses steht auch im Einklang zur weiter oben erläuterten Feststellung, dass mit kurzen - und somit breitbandigeren - Pulsen eine höhere Messgenauigkeit erzielbar ist. Die Bandbreite des Empfängers sollte daher (zumindest in etwa) auf die Bandbreite des ausgesendeten Puls-Signals abgestimmt sein.

Die bekannten Lösungen aus dem Stand der Technik sind daher in ihrer bekannten Form eine Kompromisslösung bezüglich der zur Entfernungsmessung verwendeten Signale. Besonders bei Entfernungsmessern in Beobachtungsgeräten, welche nicht zur hochgenauen geodätischen Landvermessung bestimmt sind, beispielsweise mit Messgenauigkeiten etwa in einem Bereich um einen Meter und mit Messbereichen bis zu 5, 10, 20, 30 km oder mehr und welche im allgemeinen keine speziellen Zielmarken zur Messung erfordern, wird im Stand der Technik beim Gerätedesign das verwendete Signal derart aus- und festgelegt, dass eine Distanzmessung über den gesamten spezifizierten Messbereich möglich ist (bzw. der Bereich anhand der Möglichkeiten des verwendeten Signals spezifiziert).

In US 2009/273770 ist ein LIDAR-System für Luftfahrzeuge gezeigt, bei welchem zur Sicherstellung der Augensicherheit die Laser-Ausgangsleistung automatisch angepasst wird. Dabei wird eine geringste Entfernung im Messsignal ermittelt und daraufhin die Laserausgangsleistung derart angepasst, dass für menschliche Ziele in dieser geringsten Entfernung die Einhaltung der Augensicherheitsauflagen gewährleist ist.

Es ist eine Aufgabe der vorliegenden Erfindung, einen optoelektronischen Distanzmesser zu verbessern.

Eine Aufgabe ist dabei, auch den Distanzmessbereich eines EDMs, also jenen Distanzbereich, in welchem eine Distanzmessung möglich ist, zu erweitern, speziell ohne dabei an Messgenauigkeit im Nahbereich zu verlieren.

Es ist insbesondere eine Aufgabe die relative Distanzmessgenauigkeit bezogen auf die Entfernung über die Messreichweite hinweg, speziell jeweils am oberen und unteren Ende des erfassbaren Messbereichs, zu verbessern.

Die Verbesserung und Vereinfachung des Entfernungsmessers durch eine einfache Anpassung von Parametern der Distanzmessung an die Verhältnisse der jeweiligen Messaufgabe ist eine weitere Aufgabe der vorliegenden Erfindung.

Es ist auch eine spezielle Aufgabe, benutzerselektierbare Messmodi bereitzustellen, mit welchen auf die jeweiligen Anforderungen einer Messaufgabe eingegangen werden kann Dabei kann dem Benutzer eine Wahlfreiheit zwischen einer grösseren maximalen Distanzreichweite - dafür aber mit einem ungenaueren Distanzmesswert, bzw. einer geringeren maximalen Distanzreichweite - dafür aber mit einer präziseren Messung des Distanzwerts gegeben werden.

Als spezielle Aufgabe ist dabei eine Sendeeinheit für einen Entfernungsmesser, insbesondere eine Halbleiterlaser-Treiberstufe als Impulsendstufe, bereitzustellen, mit welcher die emittierten Pulse nicht nur in ihrem Amplitudenwert, sondern auch in ihrer Pulsdauer beeinflussbar sind.

Erfindungsgemäß werden kurze Pulse, welche mit einer großen Bandbreite der verwendeten Empfangsschaltung ausgewertet werden, bei entsprechend hohen Signalstärken (also speziell bei kurzen Distanzen, gut reflektierenden Zielen und/oder guter Sicht) angewendet. Diese kurzen Pulse, ermöglichen - hochfrequent ausgewertet - eine genaue Distanzmessung. Unter großer Bandbreite kann in diesem Zusammenhang insbesondere eine hardwaretechnisch größtmögliche, bzw. als Designkriterium bei der Schaltungsauslegung vorgegebenen Bandbreite der Empfangsschaltung angewendet werden.

Reicht die empfangene Signalintensität gegenüber dem Rauschen nicht aus, um eine Messung erfolgreich (speziell in der geforderten Zeit) durchzuführen, so werden erfindungsgemäß Impulse von längerer Pulsdauer ausgesendet, welche auch entsprechend mit niedrigerer Bandbreite auswertbar sind. Dieses ermöglicht ein schmalbandigeres Filtern und besseres Unterdrücken des Rauschens und somit eine Verbesserung des SNR.

Da die Hardware-Empfangsschaltung ohnehin auf die höhere Bandbreite der kurzen Pulse ausgelegt ist, kann hierbei insbesondere eine digitale Filterung in Soft- oder Hardware angewendet werden. Die Alternative einer Bandbreitenanpassung eines analogen Filters ist zwar ebenfalls möglich, jedoch kann sich ein Umschalten von analogen Filterkoeffizienten aufwändig gestalten, die Komplexität sowie den Bauteilaufwand der Schaltung erhöhen und die Schaltungs-Performance generell verringern.

Zusammengefasst lässt sich erfindungsgemäß mit zeitlich kürzen Pulsen eine höhere Messgenauigkeit erzielen, wobei diese kürzeren Pulse auch eine entsprechend hohe Bandbreite im Empfänger erfordern. Die hohe Bandbreite bewirkt aber auch eine Erhöhung des Rauschterms bzw. eine Verschlechterung des SNR. Dieses schlechtere SNR reduziert die maximal mögliche Messdistanz, da die empfangene Signalstärke mit zunehmender Zieldistanz abnimmt. Deshalb wird erfindungsgemäß mit zeitlich langen Pulsen die maximal mögliche Messdistanz vergrössert, speziell da diese mit niedrigerer Bandbreite und somit reduziertem Rauschterm bzw. verbessertem SNR ausgewertet werden können.

Ein erfindungsgemäßer elektrooptischer Entfernungsmesser, insbesondere ein Laser-Distanzmesser, auch als EDM (Elektronischer Distanz-Messer) oder LRF (Laser Range Finder) bezeichnet, ist zur erfindungsgemäßen Lösung dieser Aufgaben aufgebaut mit

- einer Sendeeinheit mit einer Treiberstufe für eine Lichtquelle, insbesondere einer Halbleiterlichtquelle, zur Aussendung von optischen Pulsen als pulsförmig intensitätsmodulierte optische Strahlung,

- einer Empfangseinheit zum Empfang eines von einem Zielobjekt zurückgeworfenen Anteils der optischen Strahlung und zur Umwandlung in ein elektrisches Empfangssignal durch ein photosensitives elektrisches Bauelement, insbesondere einer Photodiode, speziell einer APD oder PIN-Photodiode,

- einem Analog-Digital-Wandler zur Digitalisierung des Empfangssignals, und

- einer elektronischen Auswerteeinheit, welche derart ausgebildet ist, dass auf Basis einer Signallaufzeit anhand des digitalisierten Empfangssignals eine Distanz zum Zielobjekt ermittelbar ist.

Erfindungsgemäß ist die Treiberstufe derart ausgebildet, dass die optischen Pulse mit einer variabel einstellbaren Pulsdauer emittierbar sind.

Bei dem Entfernungsmesser kann die elektronischen Auswerteeinheit weiters derart ausgebildet sein, dass bei der Ermittlung der Distanz, mit einem Filter, eine Bandbreite des Empfangssignals der eingestellten Pulsdauer anpasst wird, insbesondere dass bei längerer Pulsdauer die Bandbreite reduziert, speziell die obere Grenzfrequenz einer Tiefpass-Charakteristik des Filters herabsetzt wird. Insbesondere ist die Auswerteeinheit mit einem digitalen Filter zur Anpassung der Bandbreite des digitalisierten Empfangssignals ausgebildet.

Die Treiberstufe des Entfernungsmessers kann derart ausgebildet sein, dass Pulse der optischen Strahlung mit einem variabel einstellbaren Pulsamplitudenwert emittierbar sind. Dabei können die von einer Steuereinheit vorgegebenen Werte der Pulsamplitude und der Pulsdauer jeweils unabhängig voneinander konfigurierbar sein.

Der Entfernungsmesser kann zumindest

- einen ersten Betriebsmodus mit einer eingestellten ersten, kurzen Pulsdauer und

- einen zweiten Betriebsmodus mit einer eingestellten zweiten, langen Pulsdauer

bereitstellen, insbesondere wobei der erste Betriebsmodus eine höhere Distanzmessgenauigkeit und eine geringere maximale ermittelbare Distanz aufweist, als der zweite Betriebsmodus mit einer geringeren Distanzmessgenauigkeit und eine größeren maximal ermittelbare Distanz. Dabei kann einer der Betriebsmodi von einem externen Benutzer vorgebbar sein.

Die Steuereinheit kann derart ausgebildet sein, dass die eingestellte, konfigurierte oder parametrierte Pulsdauer abhängig von einer zumindest grob ermittelten oder eingeschätzten Entfernung gewählt wird. Insbesondere kann für große Distanzen die Pulsdauer länger eingestellt werden als für kurze Distanzen. Bei Überschreitung einer Distanzschwelle durch die ermittelte Distanz kann hierbei die Pulsdauer automatisch länger eingestellt werden als unterhalb der Distanzschwelle.

Die Treiberstufe des Entfernungsmessers kann beispielsweise eine Impulsendstufe sein, welche derart ausgebildet ist, dass eine Pulsdauer von Ausgangsimpulsen, welche die Lichtquelle ansteuern, einstellbar ist, wobei insbesondere auch eine Pulsamplitude von Ausgangsimpulsen einstellbar sein kann ist.

Die Treiberstufe des Entfernungsmessers kann beispielsweise einen zuschaltbaren Kondensator aufweisen, mit dessen Zuschaltung die Pulsdauer der emittierbaren Lichtpulse einstellbar, insbesondere verlängerbar, ist.

Erfindungsgemäß kann beispielsweise ein Beobachtungsgerät mit einem zuvor beschriebenen Entfernungsmesser ausgestattet sein, bei welchem dessen Beobachtungsrichtung zumindest annähernd parallel zu einer Messrichtung des Entfernungsmessers verläuft. Dabei kann am Beobachtungsgerät ein Modus "große Distanzgenauigkeit" und ein Modus "große Messdistanz" des Entfernungsmessers selektierbar sein.

Die Erfindung betrifft ebenso ein Entfernungsmessverfahren mit

- einem Aussenden pulsförmig amplitudenmodulierter optischer Strahlung, insbesondere von Laserlicht,

- einem Empfangen eines Anteils der optischen Strahlung, welcher von einem Zielobjekt zurückgeworfen wird, mit einem photosensitiven elektrischen Bauelement, welches die empfangene optische Strahlung in ein elektrisches Empfangssignal umwandelt,

- einem Digitalisieren des Empfangssignals mit einem Analog-Digital-Wandler, und

- einem Ermitteln einer Distanz vom Entfernungsmesser zum Zielobjekt auf Basis einer Signallaufzeit mit einem Auswerten des digitalisierten Empfangssignals mittels einer elektronischen Auswerteeinheit.

Dabei erfolgt das Aussenden mit einem Einstellen einer Pulsdauer der ausgesendeten optischen Strahlung.

Mit einem konfigurierbaren Filtern des Empfangssignals beim Ermitteln der Distanz kann eine Bandbreite des Empfangssignals an die eingestellte Pulsdauer angepasst werden, dabei kann die Bandbreite bei größeren Pulsdauern verringert wird. Das Filtern kann dabei als ein digitales Filter des digitalisierten Empfangssignals erfolgen. Neben der Pulsdauer kann auch eine Pulsamplitude einstellbar sein, wobei Dauer und Amplitude jeweils getrennt voneinander einstellbar sind.

Das Einstellen der Pulsdauer kann abhängig von der Distanz erfolgen, insbesondere kann für ein fernes Zielobjekt (in größerer Distanz) eine längere Pulsdauer eingestellt werden als für ein nahes Zielobjekt (in kleinerer Distanz). Speziell kann dabei die eingestellte Pulsdauer automatisch an die ermittelte Distanz angepasst werden, insbesondere kann mit zunehmender Distanz die Impulsdauer verlängert werden, wobei speziell die Pulsamplitude konstant gehalten wird. Alternativ kann auch bei einem Signal-RauschVerhältnis (SNR) unter einer vorgegebenen Mindestschwelle ein Verlängern der Pulsdauer der ausgesendeten optischen Strahlung erfolgen.

Das erfindungsgemäße Entfernungsmessverfahren kann derart ausgeführt werden, dass ein Selektieren zwischen

- einem ersten Modus "genaue Messung" mit einem Aussenden von Lichtpulsen mit einer kürzerer Dauer als in

- einem zweiten Modus "weite Messung" mit einem Aussenden von Lichtpulsen mit einer längeren Dauer als im ersten Modus,

durchgeführt wird.

Anders gesagt betrifft die Erfindung ein Verfahren zur Anpassung des Distanzauflösungsvermögens bzw. der Distanzmessreichweite eines optoelektronischen Entfernungsmessers mit einem Anpassen einer Pulsdauer eines emittierten optischen Sendesignals des Entfernungsmessers in Abhängigkeit einer ermittelten (oder zu ermittelnden) Distanz.

Dieses kann insbesondere mit einem Verlängern der Impulsdauer bei größeren Distanzen durch eine Auswerteeinheit und einem Anpassen der Bandbreite eines zur Ermittlung der Distanz herangezogenen Empfangssignals an die Impulsdauer erfolgen. Das Verlängern kann dabei manuell durch den Benutzer oder automatisch durch die Auswerteeinheit erfolgen. Das Verlängern der Impulsdauer des emittierten Lichtes kann beispielsweise auch dynamisch und/oder distanzabhängig erfolgen. Ein erfindungsgemäßes Entfernungsmessverfahren kann auch einen Automatik-Modus aufweisen, welcher eine variable Einstellung der Pulsdauer anhand von Charakteristiken des empfangenen Signals selbsttätig vornimmt. Solche Charakteristiken können beispielsweise die Bestimmbarkeit von Empfangspulsen im Empfangssignal, deren SNR, etc. sein. In einer anderen Ausführungsform kann auch ein Automatik-Modus implementiert werden, bei welchem eine variable Einstellung der Pulsdauer abhängig von einer aktuellen Einstellung einer Fokussierung und/oder eines Zoomfaktors der Visiereinrichtung erfolgt.

Die Erfindung betrifft auch ein Computerprogrammprodukt mit Programmcode, der auf einem maschinenlesbaren Träger gespeichert ist, oder ein Computer-Daten-Signal, verkörpert durch eine elektromagnetische Welle, zur Durchführung des obigen Verfahrens. Dabei kann der Programmcode eine Variation der maximalen Messdistanz eines EDM durch einstellen einer Pulsdauer einer Treiberstufe in dem EDM durchführen. Der Programmcode kann hierzu in einer Auswerteeinheit des elektrooptischen Entfernungsmessers ausgeführt werden.

Das erfindungsgemäße Verfahren und die erfindungsgemäße Vorrichtung werden nachfolgend anhand von in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:

Fig. 1 eine erste Ausführungsform eines erfindungsgemäßen Entfernungsmessers als Block-Schema;

Fig. 2 eine beispielhafte Darstellung eines Anwendungsfalls eines erfindungsgemäßen EDMs in einem Beobachtungsgerät;

Fig. 3a eine Darstellung einer beispielhaften ersten erfindungsgemäßen Ausführungsform von emittierbaren optischen Pulsen;

Fig. 3b eine Darstellung einer beispielhaften zweiten erfindungsgemäßen Ausführungsform von emittierbaren optischen Pulsen;

Fig. 4 eine Darstellung einer beispielhaften dritten erfindungsgemäßen Ausführungsform von emittierten optischen Pulsen in einem ersten und zweiten Modus;

Fig. 5 eine Darstellung einer beispielhaften vierten Ausführungsform einer erfindungsgemäßen Einstellung von Pulsen;

Fig. 6 eine Darstellung einer beispielhaften ersten Ausführungsform einer Einstellung für unterschiedliche Messdistanzen;

Fig. 7 eine Darstellung einer beispielhaften zweiten Ausführungsform einer Einstellung für unterschiedliche Messdistanzen;

Fig. 8 eine Darstellung einer beispielhaften ersten Pulsfolge für nahe Zielobjekte;

Fig. 9 eine Darstellung einer beispielhaften zweiten Pulsfolge für weiter entfernte Zielobjekte;

Fig. 10 eine Darstellung einer beispielhaften dritten Pulsfolge für weit entfernte Zielobjekte;

Fig. 11 eine beispielhafte, schematische Darstellung einer ersten schaltungstechnischen Ausführungsform einer erfindungsgemäßen Treiberstufe;

Fig. 12 eine beispielhafte, schematische Darstellung einer zweiten schaltungstechnischen Ausführungsform einer erfindungsgemäßen Treiberstufe;

Fig. 13 eine beispielhafte, schematische Darstellung einer dritten schaltungstechnischen Ausführungsform einer erfindungsgemäßen Treiberstufe;

Fig. 14 eine beispielhafte, schematische Darstellung einer vierten schaltungstechnischen Ausführungsform einer erfindungsgemäßen Treiberstufe;

Fig. 15 eine beispielhafte, schematische Darstellung einer fünften schaltungstechnischen Ausführungsform einer erfindungsgemäßen Treiberstufe;

Fig. 16 eine beispielhafte, schematische Darstellung einer sechsten schaltungstechnischen Ausführungsform einer erfindungsgemäßen Treiberstufe.

Die Darstellungen in den Figuren dienen lediglich zur Illustration und sind nicht als maßstäblich zu betrachten. Die dargestellten Schaltschemata zeigen jeweils die schaltungstechnische Grundstruktur, welche von einem Fachmann entsprechend allgemeinen Grundsätzen der Elektronikentwicklung ergänzt oder modifiziert werden können.

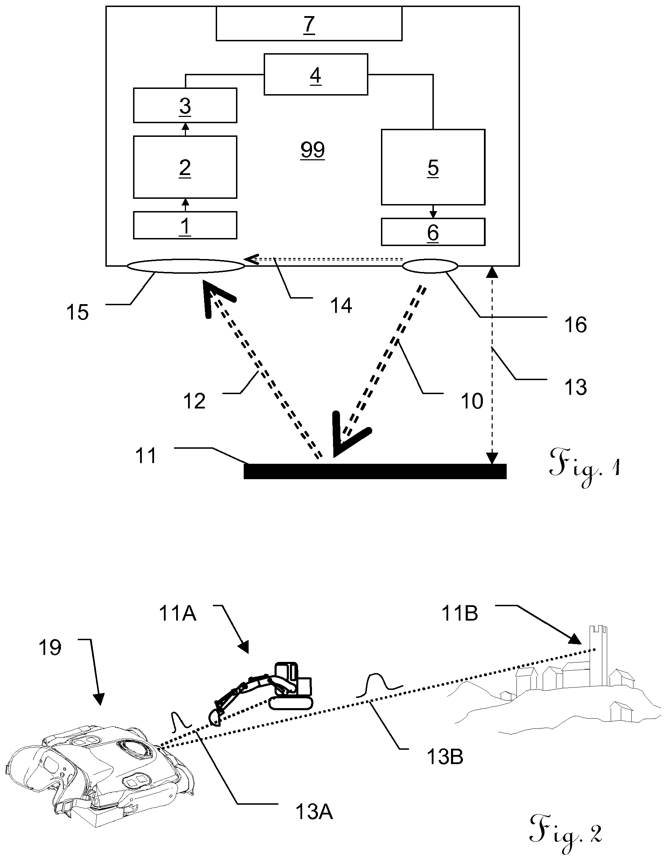

**Fig. 1** zeigt eine Ausführungsform eines erfindungsgemäßen optoelektronischen Distanzmessers 99 als Blockdiagramm. Es kann sich dabei beispielsweise um einen in ein Beobachtungsgerät eingebauten, batteriebetriebenen Entfernungsmesser handeln, welcher zum Anzielen und Bestimmen von Zielkoordinaten eines Zielobjekts 11 benutzt werden kann. Das erfindungsgemäße Prinzip kann aber auch bei andern Distanzmessern, beispielsweise in Vermessungsgeräten, angewandt werden.

In der rechten Hälfte des Distanzmesser-Blocks 99 ist die Sendeeinheit dargestellt und in der linken Hälfte die Empfangseinheit. Die hier beschriebene Trennung der beiden Einheiten ist dabei primär funktionell zu sehen und kann (muss aber nicht) in Form von zwei physisch getrennten Einheiten aufgebaut sein. Es können Ausführungsformen realisiert werden, bei denen beide Einheiten auf einer gemeinsamen Leiterplatte untergebracht sind, ebenso wie Ausführungsformen, bei welchen die Komponenten der Distanzmessung auf mehrere, auch räumlich getrennt angeordneten, Leiterplatten aufgeteilt sind.

Das Zielobjekt 11, dessen Distanz 13 zu bestimmen ist, wirft zumindest einen Teil der von der Sendeeinheit emittierten elektromagnetischen Strahlung 10 als Empfangsstrahlung 12 zur Empfangseinheit zurück. Ein Teil der emittierten Strahlung kann dabei auch als Referenzstrahl 14 über einen Referenzpfad bekannter Länge zur Empfangseinheit geführt werden. Dabei kann für den Referenzstrahl 14 und den Messstrahl 10 je eine eigene oder auch eine gemeinsame Empfangseinheit vorgesehen sein. Bei Verwendung eines separaten Referenzempfängers sind die Empfangseinheit oder Teile davon entsprechend doppelt auszuführen. Auch eine Umschaltung der Strahlführung zwischen Referenz- 14 und Messstrahl 10 ist möglich, etwa durch eine geräteinterne oder extern anbringbare Referenz-Umlenkeinrichtung. Das erfindungsgemäße Prinzip kann aber auch bei einem Entfernungsmesser ohne optischen Referenzpfad angewandt werden.

Durch das platzbedingt in **Fig. 1** unproportional nahe gezeichnete Zielobjekt 11, sind der Sende- 10 und Empfangsstrahl 12 in einem ungewöhnlich steilen Winkel zueinander dargestellt. In praktischen Ausführungsformen sind die Sende- und Empfangsstrahlengänge (also deren optische Achsen) derart ausgerichtet, dass diese als annähernd parallel zueinander angesehen werden können bzw. sich diese in einer vorgegebenen Distanz schneiden. Auch sind Ausführungsformen mit speziellen, winkelabhängig verzerrenden Optiken beim Empfänger bekannt, um einen weiten Distanzbereich, speziell hin zu kurzen Distanzen, abdecken zu können. Es sind auch Ausführungsformen mit koaxialen optischen Achsen der Sende- und Empfangsstrahlengänge bekannt, was beispielsweise durch Einspiegeln des Sendestrahls 10 in den Bereich des Zentrums der Empfangsoptik 15 erreicht werden kann.

Im Entfernungsmesser 99 ist jeweils ein Blockschema eines beispielhaften internen Aufbaus einer Ausführungsform der Sende- und Empfangeinheit dargestellt, auf welche nun im Detail eingegangen wird. Die Darstellung dient lediglich zur Erläuterung eines beispielhaften internen Geräteaufbaus, welcher im Rahmen praktischer Ausführungsformen des erfindungsgemäßen Prinzips auch variiert werden kann.

Die beispielhaft gezeigte Ausführungsform der Sendeeinheit weist einen Steuerungsprozessor 4 und eine Treiberstufe 5 für die lichtemittierende Komponente 6 auf, welche die elektrischen Signale der Treiberstufe 5 in elektromagnetische Strahlung 10,14 umwandelt. Als Lichtemitter 6 können beispielsweise Halbleiterlichtquellen, z.B. Halbleiterlaser, halbleitergepumpte Laser oder Leuchtdioden (LED) oder andere Lichtquellen eingesetzt werden. Das emittierte Licht ist durch eine Optik 16 zu einem gerichteten Strahl 10 mit geringer Divergenz kollimiert. Die Treiberstufe 5 ist dabei den Emissionscharakteristiken der Lichtquelle 6 angepasst, um die intensitätsmodulierte optische Sendestrahlung 10 zu erzeugen. Dabei kann die Intensität der emittierten Lichtsignale 10 von der Steuereinheit 4 vorgegeben werden, beispielsweise in mehreren diskreten Stufen oder auch kontinuierlich. Eine derartige Variation der optischen Ausgangsleistung kann beispielsweise angewandt werden, um entsprechend des vom Zielobjekt 11 zum Empfänger 1 zurückgelangenden Lichtanteils 12, ein Empfangssignal in einem von der Empfängereinheit auswertbaren Intensitätsbereich zu erhalten. Der vorteilhaft auswertbare Intensitätsbereich kann beispielsweise als jener Bereich definiert werden, welcher über einer untere Detektierbarkeitsgrenze der Empfangseinheit - jedoch unter einer oberen Sättigung der Empfangseinheit liegt.

Ist das Empfangssignal beispielsweise sehr schwach gegenüber dem Signalrauschen oder ist der zurückgeworfene Anteil des emittierten Puls im Empfangssignal gar nicht detektierbar, so kann die Intensität des Sendesignals (z.B. stufenweise oder kontinuierlich) erhöht werden, bis eine Bestimmung der Distanz möglich ist. Umgekehrt kann im Falle einer Übersteuerung des Empfängers die Emissionsleistung reduziert werden bis keine Sättigung der Eingangsschaltung mehr auftritt. Da das Verändern der Emissionsleistung auch von anderen, parasitären Effekten begleitet sein kann, wird die Ausgangsleistung oft zwischen diskreten Stufen variiert, für welche jeweils ein zumindest teilweiser Ausgleich der parasitären Effekte anhand von Kalibrierparametern durchgeführt werden kann.

Speziell aufgrund der Temperaturabhängigkeit der Emissionsleistung von Laserdioden kann die Treiberstufe 5 einen Regelkreis zur Einhaltung der gewünschten optischen Sendeleistung enthalten, welche beispielsweise mit einer Monitor-Photodiode überwacht wird. Auch kann die Lasertreiberstufe 5 bzw. deren Ansteuerung zur Einhaltung von Sicherheitsauflagen, etwa der Augensicherheitsrichtlinien, ausgebildet sein.

Der Steuerprozessor 4 kann in der gezeigten Ausführungsform sowohl der Sende- als auch der Empfangseinheit zugerechnet werden und steuert die Abläufe zur Bestimmung der Distanz. In anderen Ausführungsformen können auch mehrere Steuerprozessoren 4 angewandt werden, welche jeweils spezielle Teilaufgaben übernehmen. Der Steuerprozessor 4 kann beispielsweise ein entsprechend programmierter Digitalrechner, wie etwa ein Mikroprozessor oder DSP sein. Alternativ kann der Steuerprozessor 4 oder Teile davon auch als FPGA, ASIC oder mit zumindest teilweise festverdrahteter Logik ausgeführt sein.

Der Block 7 stellt die Spannungsversorgung des Entfernungsmessers dar, welche neben Versorgungsfiltern gegebenenfalls auch eine Spannungsstabilisierung bzw. -regelung oder einen Hoch- oder Tiefsetzsteller enthalten. Die Spannungsversorgung kann über Batterien, Akkus oder andere geräteinterne oder -externe elektrische Energiequellen erfolgen.

Die Empfangseinheit wandelt empfangene elektromagnetische Strahlung 12 mit dem Empfangselement 1 in ein elektrisches Signal um. Dieses kann im Block 2 für die Weiterverarbeitung noch entsprechend konditioniert werden, beispielsweise durch ein Impedanzwandeln, Filtern, Verstärken, Bandbegrenzen, heterodynes oder homodynes Mischen etc. Es kann also beispielsweise ein Eingangsfilter, ein (Transimpedanz-) Verstärker, eine Mischstufe, ein Sample&Hold-Glied, etc. oder auch eine Kombination von diesen vorhanden sein. Der Empfänger 1 der optischen Strahlung 12 kann als Empfangselement eine Photodiode verwenden, beispielsweise eine PIN- oder eine Avalanche-PhotoDiode (APD) mit entsprechender Vorspannung. Durch Variation der Vorspannung der APD kann deren Übertragungsverhältnis vom optischen Signal hin zum elektrischen Signal eingestellt werden. Bei APDs erhöht sich mit der Vorspannung jedoch nicht nur die Verstärkung, sondern auch das Rauschen.

Das konditionierte Empfangssignal wird von einem Analog-Digital-Wandler 3 digitalisiert - also Zeit und Wert quantifiziert - und einer digitalen Recheneinheit 4 (einem Mikroprozessor, DSP, FPGA, ASIC, etc.) zur Weiterverarbeitung und Bestimmung der Distanz zugeführt. Gegebenenfalls kann das EDM-System mit einem zusätzlichen externen Prozessor, Mikrocontroller oder DSP ausgestattet sein, welcher speziell Auswerte- oder Interfacing-Aufgaben übernehmen kann, beispielsweise die Bereitstellung eines Bedieninterfaces oder einer Kommunikationsschnittstelle.

Durch ein Erhöhen der Amplitude bzw. des Spitzenwerts der emittierten Signalpulse kann ebenfalls die Signal-to-Noise-Ratio des Empfangssignals verbessert werden. Einer derartigen Erhöhung sind aber physikalische Grenzen gesetzt, beispielsweise in Form einer maximal möglichen Spitzenleistung der Ansteuerschaltung oder des Lichtemitters. Um ein kostenoptimiertes Gerätedesign zu erhalten, werden die verwendeten Komponenten zumeist ohnehin im oberen Bereich ihrer zulässigen Kennwerte betrieben, sodass eine weitere Erhöhung der Ausgangsleistung in vielen Fällen nicht praktikabel ist bzw. mit höheren Kosten verbunden wäre. Höhere Ansteuerpulse können zudem zu erhöhter elektromagnetischen Störaussendung und/oder thermischen Problemen führen.

Eine erfindungsgemäße Verlängerung der Pulsdauer (auch als Pulslänge bezeichnet), kann ebenfalls zur Verbesserung des SNR angewandt werden, ohne dabei die Sendestufe auf höhere Spitzenleistungen auslegen zu müssen. Der zeitlich längere Puls erhöht zwar nicht direkt den Wert des empfangenen Signals, jedoch kann ein längerer Puls mit einer geringeren Bandbreite ausgewertet werden. Diese niedrigere Bandbreite bewirkt jedoch eine bessere Unterdrückung des Rauschens (der Rauschterm ist etwa proportional zur Quadratwurzel der Bandbreite), wodurch das SNR - sozusagen von der anderen Seite her - verbessert werden kann.

Die steileren Signalflanken und die höhere Bandbreite von kurzen Pulsen ermöglichen zwar eine genauere Distanzbestimmung, jedoch ist die dabei miterfasste Rauschbandbreite ebenfalls höher. Auch die Komponentenkosten, der Auswerteaufwand, der Stromverbrauch, etc. steigen mit höheren Bandbreiten und entsprechend höheren Messfrequenzen der Auswerteschaltungen, was für viele Anwendungen, insbesondere mobile Anwendungen, nicht akzeptabel ist.

Eine Erhöhung der Pulsamplitude kann somit bis zu gewissen Distanzen (oder Zielreflektivitäten) das Mittel der Wahl sein, lässt sich aber praktisch nicht beliebig hin zu sehr großen Reichweiten skalieren. Auch können damit andere Nachteile verbunden sein wie ein höherer Stromverbrauch oder eine längeren Messzeit, da erst durch Überlagern einer Vielzahl von Empfangssignalen ein für eine Messung hinreichend grosses SNR erzielt werden kann. In manchen Anwendungen kann eine schnelle, energiesparende Messung, bzw. eine größere Messreichweite bevorzugt werden, auch wenn sich dadurch die Messgenauigkeit verringert. Das erfindungsgemäße Konzept ermöglicht auch eine Umschaltung zwischen zwei oder mehreren Betriebsmodi, mit welchen jeweils die maximale Reichweite (bzw. invers hierzu die erzielbare Messgenauigkeit) am fertigen Gerät (sogar während der Messung) selektiert werden kann.

Erfindungsgemäß wird der EDM verbessert, indem eine hohe Reichweite erfassbar und einer Messung zugänglich gemacht wird. Der messbare Reichweitenbereich des EDMs wird somit verbessert, bzw. wird die Distanzbestimmung für einen weiten Distanzbereich von Zielobjekten ermöglicht. Dieses wird erfindungsgemäß erreicht, indem bei größeren Messdistanzen die zeitliche Dauer der emittierten Lichtpulse verlängert wird, was z.B. mit einer Verlängerung der Ansteuerimpulse der Lichtquelle realisiert werden kann. Bei kürzeren Messdistanzen, bei welchen keine derart große Reichweite erforderlich ist, werden erfindungsgemäß Licht- bzw. Ansteuerpulse kürzerer Zeitdauer generiert, wodurch eine höherer Genauigkeit des vom EDM bestimmten Distanzwerts erzielbar ist als bei den Pulsen mit langen Pulsdauern.

Somit kann gegenüber bekannten Geräten ein größerer Reichweitenbereich abgedeckt werden, ohne dass dadurch auch bei einer Messung im Nahbereich eine geringere Messgenauigkeit in Kauf genommen werden muss. Beispielsweise kann hierzu ein Wechsel des Betriebsmodus in der Sendeeinheit durchgeführt werden, je nach Ausführungsform manuell durch den Benutzer oder automatisch durch eine Steuereinheit des EDMs, beispielsweise aufgrund von Charakteristika der Empfangssignale.

Bei der Wahl der kleinsten Pulsbreite in einem Entfernungsmesser gilt es meist die Bandbreite der Hardware der Empfängerschaltung zu berücksichtigen, da diese die im Rahmen der Distanzmessung eine sinnvoll verarbeitbare, minimale Pulsdauer beschränkt.

Fig. 2 zeigt einen beispielhaften Einsatz eines erfindungsgemäßen Entfernungsmessers 99 in einem Beobachtungsgerät 19, welches zur Anzielung eines Zielobjekts 11 und Bestimmung dessen Distanz 13 zum Beobachter eingesetzt werden kann. Das Beobachtungsgerät hat dabei eine Beobachtungsrichtung, welche zumindest annähernd mit der Messrichtung der Distanzmessung übereinstimmt, sodass mit dem Entfernungsmesser 99 eine Distanz zu einem beobachteten Zielpunkt 11 ermittelt werden kann. Beispielsweise kann zudem mittels eines sogenannten Goniometers, also beispielsweise mittels Neigungssensoren im Beobachtungsgerät (oder in einem das Beobachtungsgerät tragenden Stativ) eine Neigung der Messrichtung gegenüber der Horizontalen ermittelt werden, wodurch beispielsweise eine Horizontalprojektion der vom EDM bestimmten Distanz 13 ermittelbar ist. Auch kann, z.B. mit einem Kompass oder einer vertikalen Winkelmessung im Beobachtungsgerät oder Stativ, eine azimutale Messrichtung bestimmt werden. Das Gerät kann somit beispielsweise zur Bestimmung von geographischen Koordinaten des Zielobjekts 11 eingesetzt werden.

Mit dem in Fig. 2 gezeigten mit einem erfindungsgemäßen Entfernungsmessers ausgestatteten Beobachtungsgerät 19 wird eine kurze Distanz 13A zu dem Fahrzeug 11A als einem erstem Zielobjekt unter Emission von kurzen Lichtpulsen mit hoher Messgenauigkeit ermittelt (symbolisiert durch den bei der Messdistanz dargestellten kurzen Puls). Die Distanz zum weit entfernten Gebäude 11B als zweites Zielobjekt ist mit dem kurzen Puls nicht bestimmbar, da das SNR des Messsignals zu gering ist. Deshalb wird die weite Distanz 13B mit einem Puls von langer Zeitdauer ermittelt (symbolisiert durch den bei der Messdistanz dargestellten langen Puls). Selbst wenn hierbei die erzielbare Messgenauigkeit im Vergleich zur Messung mit den kurzen Pulsen geringer ist, so ist eine Vermessung dieses fernen Zieles 11B somit zumindest möglich. In etlichen Anwendungen ist eine weniger genaue Messung von fernen Zielen gegenüber keiner Messung vorzuziehen. Erfindungsgemäß kann über den gesamten Messbereich die relative Messgenauigkeit, bezogen auf die gemessene Distanz, gegenüber einer Messung mit fixer Pulsdauer verbessert werden. Beispielsweise kann der Benutzer des Beobachtungsgeräts 19 hierfür während des Messeinsatzes zwischen zwei entsprechenden Messmodi für nahe oder ferne Ziele (bzw. für hohe oder niedrige Messgenauigkeit) wählen.

Erfindungsgemäß wird zur Messung von kurzen Distanzen mit kurzen Pulsdauern gearbeitet und zur Messung von langen Distanzen mit langen Pulsdauern gearbeitet. Betrachtet man das erfindungsgemäße Prinzip von der Seite der erzielbaren Messgenauigkeit her, so wird zwischen einer genauen Messung - mit eingeschränkter Distanzreichweite - durch kurze Pulse und einer ungenaueren Messung - mit erweiterter Distanzreichweite - durch lange Pulse gearbeitet.

Die Emission von Pulsen längerer Zeitdauern ist besser geeignet um große Messdistanzen zu überbrücken. Im Vergleich zu einem kurzen Puls ist die Spitzen-Signalintensität des langen Pulses zwar nicht höher, jedoch kann bei geringerer Bandbreite mehr Rauschen ausgefiltert werden, wodurch beim langen Puls das auszuwertende Signal über der Nachweisgrenze der Empfängerschaltung bzw. der Signalauswertung liegt. Hingegen wird die Signalenergie von kurzen Pulsen bei langen Distanzen nicht ausreichen, um den Puls aus dem nun breitbandigeren und entsprechend stärkeren Rauschen auszuwerten, sodass dieser nicht mehr hinreichend detektierbar ist und somit keine zuverlässige Distanzbestimmung mehr möglich ist.

Mit der erfindungsgemäßen Pulsverbreiterung wird zwar eine gewisse Verschlechterung der Messgenauigkeit gegenüber den kurzen Pulsen in Kauf genommen, jedoch lässt sich bei gleich bleibender Amplitude eine weitere Verbesserung des SNR erzielen, was besonders bei schwachen Signalen von großen Distanzen von Nutzen ist und somit eine Erweiterung der maximalen Reichweite der Distanzmessung ermöglicht.

Beispielsweise kann bei einem EDM ein erster Betriebsmodus für nahe bis mittlere Entfernungen bereitgestellt werden, in welchem kurze Pulse emittiert werden. Dieser erste Modus zeichnet sich durch eine limitierte Reichweite aber hohe Distanzmessgenauigkeit aus.

In einem zweiten Betriebsmodus für ferne Zielobjekte, in welchem zeitlich breitere Pulse emittiert werden, ist zwar die Messgenauigkeit geringer als im ersten Modus, jedoch lassen sich in diesem Messreichweiten erzielen, welche im ersten Modus eventuell gar nicht mehr messbar sind, oder aufgrund des schlechten SNR ungenauer messbar sind als im zweiten Modus. Dieser zweite Modus zeichnet sich durch eine höchstmögliche Reichweite aber geringere Distanzmessgenauigkeit aus.

Innerhalb von einem oder von beiden Modi kann zudem eine Variation der Impulsamplitude, abhängig von der Reflektivität des Zielobjekts und/oder der Messdistanz, also abhängig von der Intensität des Empfangssignals, erfolgen. In einer erfindungsgemäßen Ausführungsform kann deshalb nicht nur die Pulsamplitude, sondern auch die Pulsbreite des emittierten Lichts variiert werden. Anders gesagt ist die Treiberstufe der Lichtquelle derart ausgebildet, dass von dieser Ansteuerpulse mit veränderbarem Amplitudenwert und mit veränderbarer Zeitdauer erzeugbar sind, wobei diese beiden Parameter während des Betriebs der Treiberstufe veränderbar sind.

Das erfindungsgemäße Prinzip kann auch auf mehr als zwei unterschiedliche Pulsdauern ausgeweitet werden, beispielsweise auf eine Anzahl von 3, 4, 5, 6, ... unterschiedlichen Pulsdauern bis hin zu einer quasikontinuierlichen oder kontinuierlichen Selektion der Pulsdauern. Beispielsweise werden dabei vom Entfernungsmesser mehrere entsprechende Modi zur Verfügung gestellt. Die Anzahl der Modi kann somit beliebig erweitert werden, von einer Auswahl aus zumindest zwei Modi mit jeweils diskreten Pulsbreiten bis hin zu einer kontinuierlichen oder quasikontinuierlichen Variation der Pulsbreite.

Die Auswahl der Modi kann dabei manuell durch den Benutzer, durch die Steuerelektronik des Entfernungsmessers oder automatisch anhand der ermittelten Distanz durchgeführt werden. Beispielsweise kann der Benutzer anhand seiner subjektiven Einschätzung der Distanz einen Modus auswählen. Dem Ergebnis eines ersten Distanzmessversuchs zufolge kann der EDM den Benutzer gegebenenfalls darauf hinweisen, dass infolge von Charakteristiken des Empfangssignals, bei einem Wechsel des Modus voraussichtlich ein besseres Messergebnis erzielbar wäre bzw. einen solchen Moduswechsel und einen erneuten Messversuch selbsttätig durchführen.

Die oben beschriebene Gegebenheit zeigt sich beispielsweise auch darin, dass hochgenaue geodätische Entfernungsmesser mit zeitlich kurzen bis sehr kurzen Lichtpulsen arbeiten, z.B. mit Modulationsfrequenzen der emittierten Signale im Bereich von 200 bis 500 MHz oder bis in den GHz-Bereich.

Genaue Messungen großer Distanzen nehmen oft auch eine beträchtliche Messzeit in Anspruch und/oder es werden dabei spezielle Reflektoren am Zielpunkt benötigt, welche einen großen Anteil des ausgesendeten Signals zum Messgerät zurückwerfen. Bei geodätischen Vermessungen spielt dieses oft eine untergeordnete Rolle, insbesondere da z.B. eine ordnungsgemäße Geräteaufstellung und Versicherung in einem übergeordneten Koordinatensystem ein Vielfaches der Zeitdauer einer Messung in Anspruch nimmt. Kürzere Messzeiten sind zwar grundsätzlich immer willkommen, jedoch ist in Bereichen wie etwa der Landvermessung das Einhalten einer geforderten Messgenauigkeit vorrangig.

Es gibt jedoch auch Messaufgaben, bei denen die Messgeschwindigkeit von höherer Bedeutung ist. Beispielsweise ein messendes Beobachten von Vorgängen in Gefahrenzonen, beispielsweise mit handgehaltenen Geräten, welche lediglich über GPS mit einer mittleren Genauigkeit referenziert sind und deren Winkelausrichtung beispielsweise über einen Neigungssensor und/oder einen Kompass ermittelt werden. Im Hinblick auf die dabei ohnehin limitierte, erzielbare Gesamtgenauigkeit ist in solchen Anwendungen oftmals eine Distanzmessgenauigkeit im Meterbereich ausreichend.

Beispielsweise begrenzt auch die beschränkte Stabilität der Gerätehaltung von handgehaltenen Beobachtungsgeräten mit Distanzmessfunktionalität den als sinnvoll zu erachtenden Distanzmessgenauigkeitsbereich. Eine Distanzmessung auf Millimeter-Genauigkeit macht mit einem handgehaltenen Beobachtungsgerät wenig Sinn, besonders bei Messdistanzen im Bereich von hundert Metern oder einigen Kilometern. Ein vergrößerndes Beobachten und Vermessen von weit entfernten Zielen ist eine häufige Aufgabe, welche von derartigen handgehaltenen Geräten zu erfüllen ist. In gewissen Anwendungen ist eine große Messreichweite, welche eine Beobachtung und Vermessung aus einem größeren Abstand von einer Gefahrenzone ermöglicht, vorzuziehen. Beispiele hierfür können z.B. Jagdeinsätze, Militäroder Polizei-Operationen, Landmarken-Navigation von Fußgängern, Land-, Luft- oder Wasserfahrzeugen, etc. sein.

Eine Möglichkeit, die Pulsdauer der Emission während des Messbetriebs zu ändern, erlaubt den Bau einer neuen Generation von EDM-Geräten, bei welchen der Benutzer die Möglichkeit hat zu wählen, ob eine genaue Distanzmessung bis hin zu moderaten Messreichweiten bzw. einer weniger genauen Distanzmessung - jedoch mit maximaler Reichweite - durchgeführt werden soll.

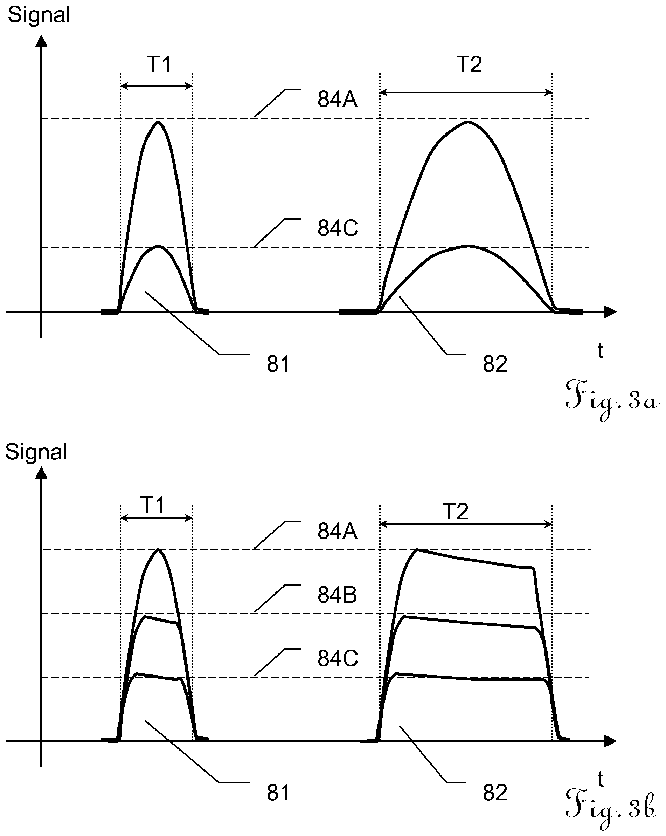

Fig. 3a zeigt eine beispielhafte Illustration von Pulsformen, welche erfindungsgemäß in ihrer Pulsdauer einstellbar sind. Dabei sind beispielhaft zwei Stufen der Pulsdauer - kurze Pulse 81 der Dauer T1 und lange Pulse 82 der Dauer T2 dargestellt. Die Pulsform ist dabei rein beispielhaft in etwa sinusförmig dargestellt und kann auch von der dargestellten Form abweichen (z.B. gaussförmige Pulse, asymmetrisch gaussförmige Pulse, Rechteckpulse, Trapez-Pulse, Sinc-Pulse, etc.). Die dargestellte Form ist das zeitliche Intensitätsprofil der optischen Intensität der emittierten elektromagnetischen Strahlung, welche sich aus dem zugehörigen Profil der elektrischen Ansteuersignale der Lichtquelle 6 und der Emissionscharakteristik der Lichtquelle 6 ergibt. Die Pulsdauer kann beispielsweise durch den Zeitabstand zwischen dem Überschreiten und Unterschreiten einer vorgegebenen relativen Amplitudenschwelle definiert werden, z.B. 50%, 10%, 90%. Alternativ kann auch der Einschluss eines definierten Anteils an der Signalenergie bzw. der Fläche unter der Kurve zur Definition der Pulsdauer herangezogen werden.

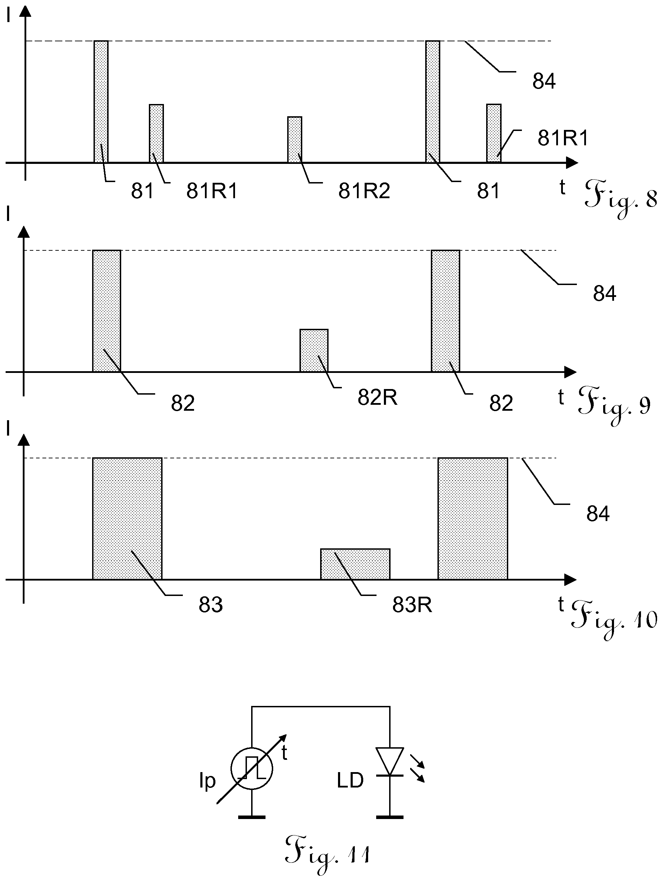

Im Diagramm sind der kurze und lange Puls zeitlich direkt hintereinander dargestellt, in einer erfindungsgemäßen Ausführungsform kann jedoch entweder die kurze Pulsdauer 81 oder die lange Pulsdauer 82 - je nach aktivem Betriebsmodus - selektiert sein und jeweils nur diese Pulsdauer Verwendung finden, wie diese beispielsweise in Fig. 8 bis Fig. 10 dargestellt ist.

In der Figur ist auch eine weitere Ausführungsform dargestellt, bei welcher die Pulsenergie reduziert ist. In der Darstellung sind jeweils kurze und lange Pulse mit zwei unterschiedlichen Pulsamplituden dargestellt, jeweils mit dem Amplitudenwerte 84A und 84C.

**Fig. 3b** stellt beispielhaft eine andere Pulsform dar, welche etwa durch eine anders aufgebaute Treiberschaltung 5 erzielbar ist, wie dieses weiter unten noch erläutert wird. Es sind wieder kurze Pulse 81 mit einer eingestellten Pulsdauer von T1 und lange Pulse 82 mit einer eingestellten Pulsdauer von T2 dargestellt, wobei in dieser Ausführungsform auch die Pulsamplitude in 3 Stufen 84A, 84B oder 84C einstellbar ist.

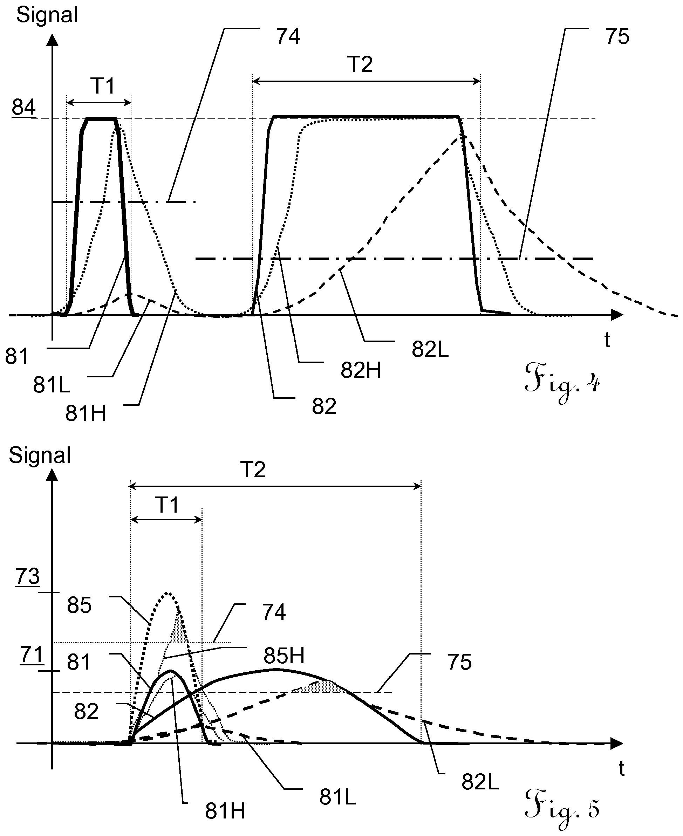

**Fig. 4** stellt ein Aussenden von kurzen und langen Pulsen dar, beispielsweise mit einer kurzen Pulsdauer T1 von etwa 100ns und einer langen Pulsdauer T2 von etwa 400ns. Die hier genannten Pulsdauern können auch anders gewählt werden, insbesondere kürzer. Auch das Verhältnis von kurzem zu langem Puls kann abweichend sein. Die Signalamplitude der beiden Signale 81 und 82 ist jeweils gleich auf dem Wert 84. Zur Erläuterung ist hier nun jeweils von beiden Signalen eine bandbegrenzte Darstellung gezeigt. Der kurze Puls 81 mit einer breitbandigen Filterung 81H und mit einer schmalbandigen Filterung 81L, bzw. der lange Puls 82 mit einer breitbandigen Filterung 82H und mit einer schmalbandigen Filterung 82L. Der sich bei der Filterung ergebenden Rauschpegel ist für die breitbandige Filterung auf dem Wert 74 und für die schmalbandige Filterung auf dem Wert 75 dargestellt.

Wird der kurze Puls 81 breitbandig gefiltert, so liegt der Amplitudenwert des gefilterten Signals 81H hinreichend über dem äquivalenten Rauschpegel 74 der breitbandigen Filterung, wodurch eine Distanzbestimmung möglich ist. Die breitbandige Filterung kann beispielsweise durch die spezifizierte Bandbreite der Empfangsschaltungs-Hardware, speziell der Bandbreite einer analogen Eingangsstufe, bestimmt werden. Würde der kurze Puls 81 hingegen schmalbandiger gefiltert werden, so würde das entstehende Signal 81L unterhalb des zugehörigen Rauschpegels der niederfrequenten Filterung 75 liegen, wodurch keine Distanzbestimmung möglich wäre.

Eine breitbandige Filterung des langen Pulses 82 führt zum Signal 82H, welches gegenüber dem Signal 81H keine wesentlichen Vorteile im Hinblick auf die Distanzauswertung bringt, sondern bezüglich der erzielbaren Distanzgenauigkeit tendenziell eher nachteilig ist. Das sich ergebende SNR ist aufgrund des in etwa gleich großen Spitzenwerts nicht wesentlich besser.

Bei einer schmalbandigen Auswertung des Signals 82 ist zwar die Signalstärke auch nicht besser als jene von Signal 81H, jedoch ist mehr Rauschen ausgefiltert, was einen äquivalenten Rauschpegel 75 ergibt. Das Signal-Rausch Verhältnis ist in diesem Fall bei langer Pulsdauer T2 und schmalbandiger Filterung 82L verbessert worden.

**Fig. 5** zeigt nun obiges Prinzip der erfindungsgemäßen Reichweitenverbesserung mittels langer Pulsdauern an einem Beispiel, bei welchem eine Messung mit kurzen Pulsen gar nicht mehr möglich wäre.

Der kurze Puls 81, kommt bei breitbandiger Filterung 81H unter dem sich durch die Filterung ergebenen Rauschpegel 74 zu liegen, wodurch keine Distanzbestimmung möglich ist. Ein schmalbandiger gefilterter kurzer Puls 81L ergäbe sogar ein noch geringeres Signal.

Wird der lange Puls 82 breitbandig ausgewertet, so bleibt die Pulsform in etwa erhalten und die Kurve 82H fällt mit 82 zusammen, weshalb diese auch nicht dargestellt ist. Dieses ändert aber nichts an der Tatsache, dass der Signalwert unterhalb des zur breitbandigen Filterung gehörenden Rauschwerts 74 liegt und somit keine Distanzbestimmung möglich ist.

Eine schmalbandige Auswertung des langen Pulses 82 ergibt die Pulsform 82L, welche absolut gesehen von der Amplitude her sogar nachteilig gegenüber der breitbandigen Auswertung 82H(=82) ist. Jedoch verringert sich durch die Filterung bei der Auswertung auch der dabei aufgenommene Rauschpegel 75 gegenüber jenem der breitbandigen Auswertung 74. Somit kann dennoch ein SNR von größer 1 erzielt werden, was durch die graue Fläche gekennzeichnet ist. Es ist dem Fachmann verständlich, dass die in den Erläuterungen beispielhaft angeführte Bedingung eines SNR > 1 lediglich eine Auswertbarkeit des Signals symbolisieren soll. In praktischen Ausführungen kann durchaus ein höherer oder niedrigerer SNR-Wert als Grenze für die Bestimmbarkeit der Distanz zum Tragen kommen, beispielsweise wenn zusätzliche weitere Methoden (z.B. statistische Mittelungen, Signalakkumulation, Korrelationsempfang, etc.) zur Verbesserung des SNR angewandt werden.

Um ein in etwa äquivalentes SNR mit eine kurzen Puls 81 und breitbandiger Auswertung zu erreichen, müsste im gezeigten Beispiel die Pulsamplitude auf etwa das Doppelte angehoben werden, wie diese die Kurven 85 und 85H zeigen. Dass hierbei durch die breitbandigere Auswertung gegebenenfalls eine hoher Distanzmessgenauigkeit erzielbar wäre, steht ausser Frage, jedoch ist eine beliebige Erhöhung der Emissionsleistung aus verschiedensten Gründen (von welchen etliche erwähnt sind) praktisch nicht immer durchführbar.

Entsprechend obiger Analyse kann die Distanzreichweite bei nur schwachen zurückkommenden Signalen zu somit geringem SNR erfindungsgemäß verbessert werden. Als simplifiziertes, numerisches Exempel kann hierzu erfindungsgemäß beispielsweise mit einer Vervierfachung der Pulsdauer und entsprechender Reduktion der Bandbreite in der Auswertung das Rauschen mit $N = \sqrt{(BW)}$ - also $N = \sqrt{(1/4)} = 1/2$ - verringert werden, oder anders gesagt das SNR um einen Faktor von zwei verbessert werden. Dadurch können auch diese großen Distanzen, welche bei kurzen Pulsen unter die Messbarkeitsschwelle des SNR fallen würden, vom EDM ermittelt werden.

Dieses (vereinfachte) Beispiel zeigt somit, dass eine Distanz, bei welcher das zurückkommende Signal beispielsweise aufgrund der langen Messdistanz nur den Pegel 71 aufweist mit einem langen Puls 82 messbar ist, wohingegen ein kurzer Puls zu keinem Messergebnis führen würde. Die maximale Messdistanz oder Distanzreichweite des EDM ist somit erfindungsgemäß verbessert worden.

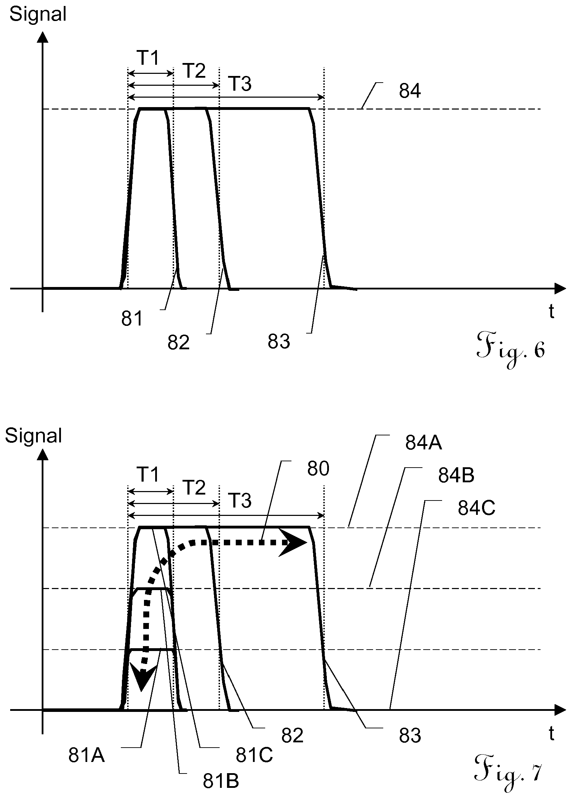

In **Fig. 6** ist eine weitere Ausführungsform einer erfindungsgemäßen Modifikation der Lichtpulse dargestellt, bei welcher Sendepulse mit drei unterschiedlichen Pulslängen überlagert - mit einem gemeinsamen Emissionszeitpunkt - gezeichnet sind. Erfindungsgemäß werden dabei die kurzen Pulse 81 (T1) für nahe Zielobjekte, die mittleren Pulsdauern 82 (T2) für mittlere Reichweiten und die langen Pulsdauern 83 (T3) für weit entfernte Zielobjekte verwendet, wobei hin zu längeren Pulsen eine größere maximale Messdistanz erfassbar ist. Die dargestellte dreifache Abstufung der Pulsdauer T1, T2 und T3 ist dabei rein beispielhaft zu sehen und kann in konkreten Ausführungsformen von einer zweistufigen bis hin zu einer (quasi-) kontinuierlichen Einstellbarkeit der Pulsdauer ausgebildet sein.

**Fig. 7** stellt eine Ausführungsform dar, bei welcher eine mögliche Einstellung einer Treiberstufe über den Distanzmessbereich dargestellt ist. Hierbei werden für große Distanzen lange Pulse 83 verwendet, welche mit der niedrigen Bandbreite in der Auswertung von allen Modi zwar die geringste Distanzgenauigkeit jedoch das höchste SNR aufweist.

Ist beispielsweise bei kürzeren Distanzen das SNR ohnehin hinreichend, so wird die Pulsdauer T2 eingestellt und die Bandbreite bei der Auswertung erhöht - was die erreichbare Messgenauigkeit verbessert. Eine sich dadurch ergebende Verminderung des SNR - welche allenfalls auch eine Verminderung der maximal messbaren Reichweite mit sich bringt - kann dabei aufgrund der hinreichenden Empfangssignale in Kauf genommen werden.

Bei noch kürzeren Distanzen können analog die Puls 81C mit einer Pulsdauer von T1 angewendet werden. Hierbei kann z.B. die volle Bandbreite der verwendeten Empfängerelektronik genutzt werden, um möglichst genaue Distanzinformationen ermitteln zu können. Das empfangene Signal ist hinreichend stark, um auch bei der dadurch erhöhten Rauschbandbreite ein hinreichendes SNR zu erhalten.

Wird des Empfangssignal zu stark, beispielsweise aufgrund hochreflektiver und/oder sehr naher Zielobjekte, so kann zur Vermeidung einer Sättigung der Empfangsschaltung - welche eine genaue Messung ebenfalls erschweren oder verunmöglichen würde - die Amplitude des Sendepulses auf jene von 81B oder 81A verringert werden. Unter besonderen Messumständen kann eine derartige Reduktion der Amplitude auch bei langen Pulsen angewandt werden. Als ein Beispiel sei hierzu der Fall einer Mehrzielmessung genannt, etwa eine Distanzbestimmung eines fernen Zieles durch Vegetation oder eine Glasscheibe.

Der Doppelpfeil 80 symbolisiert die in dieser speziellen Ausführungsform angewandte Veränderung der Einstellung der Treiberstufe über die Messdistanz. Die Einstellung entlang dieses Pfeils kann vollautomatisch anhand der aufgenommen Messwerte erfolgen. Die dabei angewandte Strategie, (z.B. Pfeilrichtung des Vorgangs bei unbekannter Distanz) kann dabei den gerätespezifischen Messaufgaben angepasst werden. In anderen Ausführungsformen kann dieses auch teilautomatisch erfolgen, etwa indem der Benutzer zwischen kurzer oder weiter Reichweite (also der Pulsdauer) wählt und die Auswerteeinheit innerhalb dieser Vorgabe automatisch die Amplitude des ausgesendeten Signals anpasst. Gegebenenfalls kann dabei der Benutzer aufgefordert werden, den Modus zu wechseln, falls dieses der Auswerteeinheit aufgrund der empfangenen Signale vorteilhaft erscheint.

**Fig. 8** illustriert ein kontinuierliches Aussenden von Einzelpulsen 81 von kurzer Dauer in einem ersten Betriebsmodus mit verhältnismäßig kurzer Maximalreichweite aber guter Distanzmessgenauigkeit. Als Pulsform wird in dieser und den folgenden Figuren vereinfachend als Rechteck dargestellt, was aber nicht einschränkend zu sehen ist. Der vom Zielobjekt zurückgeworfene Signalanteil 81R1 folgt in kurzem zeitlichen Abstand nach dem Sendepuls und hat eine relativ große Intensität oder Signalstärke. Aufgrund der hohen Signalstärke kann das empfangene Signal 81R1 mit einer hohen Bandbreite und somit mit entsprechend zeitlich hoher Genauigkeit ausgewertet werden, was eine genaue Distanzbestimmung ermöglicht. Die im ausgewerteten Signal ebenfalls enthalten große Rauschbandbreite ist dabei nicht abträglich, da wie gesagt das Nutzsignal hinreichend groß ist und somit das SNR den Anforderungen zur Distanzbestimmung genügt.

**Fig. 9** illustriert nun eine erfindungsgemäß erhöhte Pulsdauer, wobei der Amplitudenwert 84 gleich wie in Fig. 5 ist. Da die Messdistanz nun größer ist, ist der zeitliche Abstand zwischen dem Sendepuls 82 und Empfangspuls 82R entsprechend größer und auch die Amplitude des empfangenen Pulses 82R bei gleich bleibender Sendepulsamplitude geringer. Wie erläutert lässt sich durch eine Verbreiterung der Pulse und entsprechende Anpassung der Bandbreite bei der Signalauswertung dennoch ein hinreichendes SNR - oder anders gesagt eine größere maximale Messdistanz - erzielen. Die Pulse von Fig. 9 sind also vorteilhaft für große Messdistanzen einzusetzen, welche mit den Pulsen aus Fig. 8 nur schlecht oder gar nicht mehr messbar sind. Zwar ist die erzielbare Messgenauigkeit mit den langen Pulsen aus Fig. 9 geringer als jene mit den kurzen Pulsen aus Fig. 8, jedoch lassen sich mit den langen Pulsen größere Reichweiten erzielen. Die kurzen Pulse sind wie bereits erläutert hingegen vorteilhaft für eine erhöhte Genauigkeit der gemessenen Distanz, jedoch mit einem gegenüber den Pulsen aus Fig. 6 eingeschränkteren Reichweitenbereich.

**Fig. 10** stellt eine weitere Ausführungsform von nochmals längeren Pulsen 83 dar. Auch hier ist die Pulsamplitude 84, also die Intensität des emittierten Signals gleich wie in Fig. 8 und Fig. 9. Wie erwähnt kann in einer Ausführungsform aber auch der Amplitudenwert der Pulse einstellbar sein. Die in dieser Ausführungsform nochmals länger eingestellte Pulsdauer ermöglicht ein Erreichen noch größerer Maximaldistanzen als in Fig. 9. Erfindungsgemäß sind zumindest zwei Pulsdauern, eine für eine genaue Messung naher Ziele und eine für eine ungenauere Messung fernerer Ziele implementiert. Es sind jedoch auch drei oder mehr Stufen (für nahe, mittlere und ferne Ziele) sowie eine kontinuierliche oder quasi-kontinuierliche (=hoch auflösende diskrete Stufen) Einstellungsmöglichkeiten der Pulsdauern erfindungsgemäße Ausführungsformen.

Die elektronische Realisierung eines EDMs, welcher erfindungsgemäß mit unterschiedlichen Pulsdauern arbeitet, kann seitens der Treiberstufe 5 durch verschiedenste schaltungstechnische Ansätze realisiert werden. Einige exemplarische Beispiele hierfür werden anhand der folgenden Figuren erläutert. Die hier gezeigten Ausführungsformen sind nicht als abschließende Aufzählung zu betrachten. Es sind lediglich Grundschaltungen zur Bereitstellung der erfindungsgemäßen Funktionalität dargestellt. Praktische schaltungstechnische Implementierungen der gezeigten Ausführungsformen sind gegebenenfalls entsprechend dem allgemeinen Basiswissen im elektronischen Schaltungsdesign zu erweitern. Der mit dem Gebiet der Elektrotechnik vertraute Fachmann kann die entsprechenden mathematischen Darstellungen der Schaltungs-Charakteristiken herleiten bzw. durch numerische Simulationen ermitteln, um Bauteilwerte derart zu dimensionieren, dass ein erfindungsgemäßes Resultat in der praktischen Implementierung erzielt wird. Beispielsweise sind bei den hier aufgeführten Schaltungen Temperaturkompensationsschaltungen oder andere Schaltungen zur Verminderung von Fehlereinflüssen, Stützkondensatoren, Einstellungen von Arbeitspunkten von Bauteilen, etc. auf der Anschaulichkeit halber nicht dargestellt.

Der hierbei zusätzliche erforderliche Schaltungsaufwand hält sich gegenüber einem Stand der Technik Design in Grenzen. Speziell im Vergleich zu den Kosten der anderen Komponenten in einem EDM (speziell dem Laser) ist dieser quasi vernachlässigbar. Ein Nicht-Silicium-Laser, wie etwa ein 1550 nm Laser entsprechender Leistung, macht ein Vielfaches der Kosten einer erfindungsgemäß erweiterten Treiberschaltung aus. Ein Einsatz eines leistungsstärkeren Lasers zur Erweiterung der Messreichweite würde verglichen mit der vorliegenden Erfindung mehr Aufwand bedeuten.

**Fig. 11** zeigt ein beispielhaftes allgemeines Ersatzschaltbild für eine erfindungsgemäße Treiberstufe zur erfindungsgemässen Emission von Pulsen mit einstellbarer Pulsdauer in Form einer Strom-Impulsendstufe Ip mit variabler Pulsdauer t.

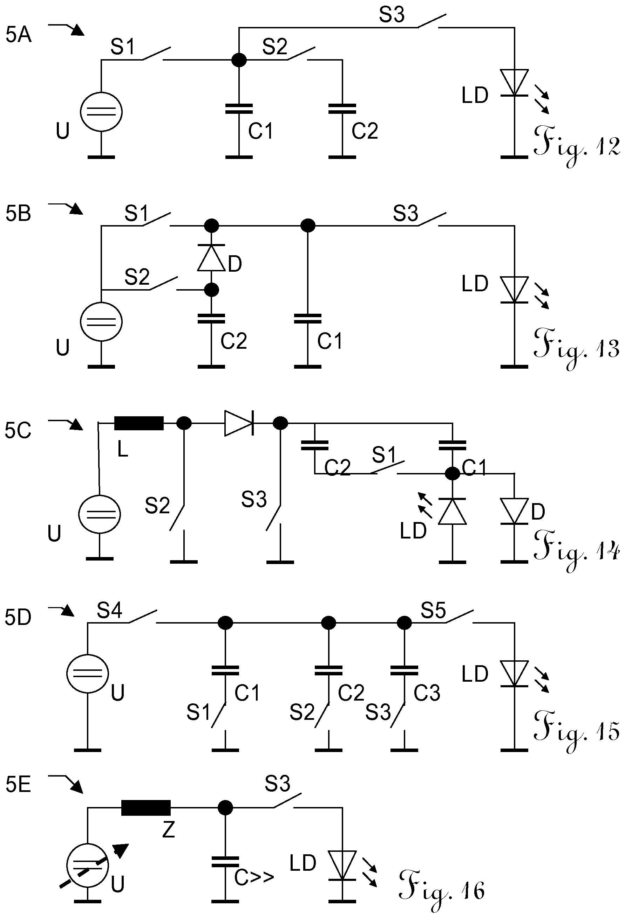

**Fig. 12** zeigt ein beispielhaftes Schaltschema einer Ausführungsform einer erfindungsgemäßen Treiberstufe 5A zur Generierung von Ansteuerpulsen mit, insbesondere während deren Betriebs, einstellbarer Pulsamplitude und einstellbarer Pulsdauer, mit welcher eine Lichtquelle LD in einem EDM ansteuerbar ist. Als Lichtquelle LD ist dabei eine Laserdiode dargestellt, wobei auch andere Lichtquellen wie Leuchtdioden, etc. eingesetzt werden können. Es kann sich bei der Lichtquelle auch um eine Pumplichtquelle eines Lasers handeln. Die Treiberstufe 5A bezieht ihre Energie in dieser Darstellung von der Spannungsquelle U, welche direkt als Spannungsquelle in Form einer Batterie oder eines Akkumulators ausgeführt sein kann, aber auch weitere elektronische Schaltungskomponenten, wie Stützkondensatoren, Hoch oder Tiefsetzsteller, Spannungsstabilisatoren, etc. aufweisen kann. Mittels des Schalters S1 kann dabei der Kondensator C1 von der Spannungsquelle geladen und mittels des Schalters S3 kann der Kondensator C1 über die Lichtquelle LD unter Emission eines Lichtpulses entladen werden. Ist der Schalter S2 geschlossen, so wird der Kondensator C2 parallel zu C1 geschaltet, und aufgrund der somit höheren Gesamtkapazität beim Schliessen des Schalters S3 ein Lichtpuls längerer Zeitdauer emittiert.

**Fig. 13** zeigt ein beispielhaftes Schaltschema einer Ausführungsform einer erfindungsgemäßen Treiberstufe 5B einer EDM-Sendeeinheit. Hierbei ist eine alternative schaltungstechnische Lösung für eine Zuschaltung einer zusätzlichen Kapazität zur Pulsdauerverlängerung durch den Schalter S2 dargestellt.

Eine erfindungsgemäße Sendeeinheit mit einer erfindungsgemäßen Impulsendstufe, welche eine Steuerung der Amplitudenwerte und der Impulsdauer der Pulse erlaubt, ermöglicht den beschriebenen Abtausch von Messgenauigkeit gegenüber der Messreichweite durch den Benutzer während oder vor der Messung im Feld. Entsprechend der vorliegenden Erfindung wird wahlweise eine Emission von kurzen Lichtpulsdauern mit einer höhere Distanzmessgenauigkeit ermöglicht oder aber eine Emission mit langen Lichtpulsdauern mit einer höhere Reichweite der Entfernungsmessung bereitgestellt, zwischen welchen auch während des Messbetriebs gewechselt werden kann.

Wie beschrieben erlaubt eine erfindungsgemäß ausgeführte Impulsendstufe (bzw. eine erfindungsgemässer Entfernungsmesser mit einer solchen oder ein Gerät mit einem solchen Entfernungsmesser), bei welchem beispielsweise zumindest zwei Impulsdauern im Feld während oder vor einer jeweiligen Messung einstellbar sind, eine Auswahl zwischen "hoher Genauigkeit der Messungen bis hin zu mittleren Reichweiten", oder "mittlerer Genauigkeiten bei höchstmöglicher Messdistanz". Es lassen sich somit zwei Welten in einem Gerätedesign vereinen und es müssen in der Designphase des Geräts diesbezüglich keine Kompromisse eingegangen werden. Allenfalls kann der EDM auch automatisch, anhand der zurückgeworfenen Signale (z.B. anhand deren Intensität oder einer ersten, groben Distanzbestimmung oder Schätzung) eine selbsttätige Variation der Emissions-Pulsdauer durchführen.

**Fig. 14** zeigt ein beispielhaftes Schaltschema einer Ausführungsform einer erfindungsgemäßen Treiberstufe 5C. Der Schaltungsteil bei der Spannungsquelle bildet dabei eine Art Hochsetzsteller. Die Variation der Pulsdauer wird wiederum durch Zuschalten eines weiteren Kondensators C2 über den Schalter S1 realisiert.

**Fig. 15** zeigt ein beispielhaftes Schaltschema einer weiteren Ausführungsform einer erfindungsgemäßen Treiberstufe 5D, bei welcher durch unterschiedliche Kombinationen der drei Schalter S1, S2 S3 unterschiedliche Sendepulse selektierbar sind.

**Fig. 16** zeigt ein beispielhaftes Schaltschema einer weiteren Ausführungsform einer erfindungsgemäßen Treiberstufe 5E, bei welcher eine nicht vollständige Entladung eines Kondensators C» stattfindet (also durch eine nicht vollständige Entladung eines Kondensators C»), welcher gegenüber den vorherigen Ausführungsformen einen höheren Kapazitätswert aufweist. Mittels der Einschaltdauer von S3 wird die Pulsdauer bestimmt, wobei der Kondensator C» nicht gänzlich entladen wird, sondern während der Pulsemission seine Spannung im Wesentlichen konstant hält. Die resultierende Pulsform entspricht dabei in etwa jener aus Fig. 3b. Optional kann die Amplitude durch Variation der Spannung U einstellbar sein (angedeutet durch den gestrichelten Pfeil).

Bei den gezeigten Schaltungen 5A, 5B, 5C, 5D, 5E können zwei oder mehr unterschiedliche Pulslängen eingestellt werden. Auch die Pulsamplitude kann bei Bedarf, z.B. durch entsprechende Schalteransteuerung oder Variation der Versorgungsspannung, einstellbar gestaltet werden. Beispielsweise kann mit einer einstellbaren Ansteuerspannung die Pulsamplitude und unabhängig davon über eine Einschaltdauer des Schalter die Pulsbreite eingestellt werden. Als Leistungstransistoren zur Schaltung der oft beträchtlichen Ansteuerströme in den Treiberschaltungen können dabei neben den klassischen Silicium-Leistungstreibern wie Bipolar- oder Feldeffekttransistoren, beispielsweise auch Galliumarsenid- oder Galliumnitrid-Transistoren verwendet werden.

**Patentansprüche**

1. Optoelektronischer Entfernungsmesser (99), insbesondere Laser-Distanzmesser, mit:

   - einer Sendeeinheit mit einer Treiberstufe (5) für eine Lichtquelle (6), insbesondere einer Halbleiterlichtquelle, zur Aussendung von optischen Pulsen als pulsförmig intensitätsmodulierte optische Strahlung (10),
   - einer Empfangseinheit zum Empfang eines von einem Zielobjekt (11) zurückgeworfenen Anteils (12) der optischen Strahlung (10) und Umwandlung in ein elektrisches Empfangssignal durch ein photosensitives elektrisches Bauelement (1), insbesondere einer Photodiode,
   - einem Analog-Digital-Wandler (3) zur Digitalisierung des Empfangssignals und
   - einer elektronischen Auswerteeinheit (4), welche derart ausgebildet ist, dass auf Basis einer Signallaufzeit anhand des digitalisierten Empfangssignals eine Distanz (13) zum Zielobjekt (11) ermittelbar ist,

   **dadurch gekennzeichnet, dass**
   die Treiberstufe (5) derart ausgebildet ist, dass zumindest zwei unterschiedlich lange Pulsdauern (T1,T2,T3) der optischen Pulse einstellbar sind,
   insbesondere wobei durch eine Verlängerung der Pulsdauer (T1,T2,T3) eine Erweiterung einer Distanzmessreichweite, als maximal ermittelbarer Distanz (13), erzielbar ist,
   und wobei die elektronische Auswerteeinheit (4) derart ausgebildet ist, dass abhängig von der Einstellung der Pulsdauer (T1,T2,T3) mittels eines konfigurierbaren Filters eine Einstellung einer Bandbreite des Empfangssignals erfolgt,
   wobei bei einer Verlängerung der Pulsdauer (T1,T2,T3) ein Reduzieren der Bandbreite mit einem Herabsetzen einer oberen Grenzfrequenz einer Tiefpass-Charakteristik des Filters erfolgt.

2. Entfernungsmesser (99) nach Anspruch 1, **dadurch gekennzeichnet, dass**
   das konfigurierbare Filter als digitales konfigurierbares Filter ausgebildet ist und das Empfangssignal ein digitalisiertes Empfangssignal ist.

3. Entfernungsmesser (99) nach einem der Ansprüche 1 oder 2, **dadurch gekennzeichnet, dass**
   der Entfernungsmesser einen ersten Betriebsmodus mit einer ersten Pulsdauer (T1,T2,T3) und zumindest einen zweiten Betriebmodus mit einer zweiten Pulsdauer (T1,T2,T3) bereitstellt, wobei die erste Pulsdauer kürzer ist als die zweite,
   insbesondere wobei einer der Betriebsmodi von einem Benutzer selektierbar ist.

4. Entfernungsmesser (99) nach einem der Ansprüche 1 bis 3, **dadurch gekennzeichnet, dass**
   die Sendeeinheit derart ausgebildet ist, dass die Einstellung der Pulsdauer (T1,T2,T3) abhängig von einer zumindest grob ermittelten oder eingeschätzten Distanz (13) zum Zielobjekt (11) erfolgt, insbesondere wobei der Entfernungsmesser (99) derart ausgebildet ist, dass die Pulsdauer für große Distanzen länger eingestellt wird als für kurze Distanzen, speziell wobei bei Überschreitung einer Distanzschwelle durch die ermittelte Distanz (13) automatisch eine Verlängerung der Pulsdauer gegenüber jener bei einer Distanz (13) unter der Distanzschwelle erfolgt.

5. Entfernungsmesser (99) nach Anspruch 1 bis 4, **dadurch gekennzeichnet, dass**
   die Treiberstufe (5) eine Impulsendstufe ist, welche derart ausgebildet ist, dass die Pulsdauer (T1,T2,T3) unabhängig von einer Pulsamplitude der optischen Pulse variabel einstellbar ist,
insbesondere wobei vorgegebene Werte der Pulsamplitude und der Pulsdauer (T1,T2,T3) jeweils unabhängig voneinander einstellbar sind.

6. Entfernungsmesser (99) nach einem der Ansprüche 1 bis 5, **dadurch gekennzeichnet, dass** die Treiberstufe zur Speicherung einer Pulsenergie einen zuschaltbaren Kondensator aufweist, mit dessen Zuschaltung die Pulsdauer (T1,T2,T3) einstellbar ist.

7. Beobachtungsgerät (19) mit einem Entfernungsmesser 99 nach einem der Ansprüche 1 bis 6, mit einer Visiereinrichtung zur Anzielung des Zielobjekts, wobei eine optische Achse (34) der Visiereinrichtung in die selbe Richtung wie eine optische Achse des Entfernungsmessers (99) weist, insbesondere wobei das Beobachtungsgerät (19) derart ausgebildet ist, dass ein erster Modus "große Distanzgenauigkeit" oder ein zweiter Modus "große Messdistanz" des Entfernungsmessers mit jeweils unterschiedlichen Pulsdauern (T1,T2,T3) selektierbar ist.

8. Beobachtungsgerät (19) nach Anspruch 7, welches einen Automatik-Modus aufweist, welcher derart ausgebildet ist, dass die variable Einstellung der Pulsdauer (T1,T2,T3) entsprechend einer Charakteristik des Empfangssignals automatisch erfolgt, insbesondere entsprechend einer Evaluierbarkeit von Empfangspulsen im Empfangssignal sowie eines dabei erzielbaren Signal zu Rausch Verhältnisses.

9. Entfernungsmessverfahren mit:

   ▪ einem Aussenden pulsförmig amplitudenmodulierter optischer Strahlung (10), insbesondere von Laserlicht,
   ▪ einem Empfangen eines Anteils der optischen Strahlung, welcher von einem Zielobjekt (11) zurückgeworfen wird, mit einem photosensitiven elektrischen Bauelement (1), welches die empfangene optische Strahlung (12) in ein elektrisches Empfangssignal umwandelt,
   ▪ einem Digitalisieren des Empfangssignals mit einem Analog-Digital-Wandler (3), und
   ▪ einem Ermitteln einer Distanz (13) zum Zielobjekt (11) auf Basis einer Signallaufzeit mit einem Auswerten des digitalisierten Empfangssignals mit einer elektronischen Auswerteeinheit (4),

   **dadurch gekennzeichnet, dass** ein Auswählen einer von zumindest zwei einstellbaren unterschiedlich langen Pulsdauern (T1,T2,T3) der optischen Strahlung erfolgt, durch welches ein Maximalwert der ermittelbaren Distanz veränderbar ist, insbesondere wobei durch ein verlängern der Pulsdauer (T1,T2,T3) der Maximalwert vergrößert wird, und wobei das Ermitteln der Distanz mit einem konfigurierbaren Filtern des Empfangssignals erfolgt, welches Filtern entsprechend der eingestellten Pulsdauer derart konfiguriert wird, dass ein Anpassen einer Bandbreite des Empfangssignals an die eingestellte Pulsdauer (T1,T2,T3) erfolgt, und die Bandbreite hin zu größeren Pulsdauern (T1,T2,T3) verringert wird, wobei bei Verlängerung der eingestellten Pulsdauer (T1,T2,T3) ein Herabsetzen einer oberen Grenzfrequenz einer Tiefpass-Charakteristik des konfigurierbaren Filters erfolgt.

10. Entfernungsmessverfahren nach Anspruch 9, **dadurch gekennzeichnet, dass** neben dem Einstellen der Pulsdauer (T1,T2,T3) auch ein Einstellen der Pulsamplitude erfolgt, insbesondere wobei Pulsdauer und Pulsamplitude jeweils unabhängig voneinander einstellbar sind.

11. Entfernungsmessverfahren nach einem der Ansprüche 9 bis 10, **dadurch gekennzeichnet, dass** das Einstellen der Pulsdauer (T1,T2,T3) abhängig von der Distanz (13) erfolgt, insbesondere wobei für ein fernes Zielobjekt (11) in größerer Distanz eine längere Pulsdauer (T1,T2,T3) eingestellt wird als für ein nahes Zielobjekt (11) in kleinerer Distanz.

12. Entfernungsmessverfahren nach Anspruch 11, **dadurch gekennzeichnet, dass** ein automatisches Anpassen der eingestellten Pulsdauer (T1,T2,T3) an die ermittelte Distanz (13) erfolgt, insbesondere wobei mit zunehmender Distanz (13) ein Verlängern der Pulsdauer (T1,T2,T3) erfolgt, speziell wobei die Pulsamplitude konstant gehalten wird.

13. Entfernungsmessverfahren nach einem der Ansprüche 9 bis 12, **dadurch gekennzeichnet, dass** ein Selektieren zwischen

   ▪ einem ersten Modus "genaue Messung" mit einem Aussenden der optischen Pulse mit einer kürzerer Pulsdauer (T1,T2,T3) als in
   ▪ zumindest einem zweiten Modus "weite Messung" mit einem Aussenden der optischen Pulse mit einer längeren Pulsdauer (T1,T2,T3) als im ersten Modus, erfolgt.

14. Verfahren zur flexiblen, distanzabhängigen Anpassung eines Distanzauflösungsvermögens eines optoelektronischen Entfernungsmessers (99) nach einem der Ansprüche 1 bis 8 mit einem Anpassen einer Pulsdauer (T1,T2,T3) eines emittierten optischen Sendesignals (10) des Entfernungsmessers (99) in Abhängigkeit einer ermittelten

oder zu ermittelnden Distanz (13), insbesondere mit einem automatischen Verlängern der Pulsdauer (T1,T2,T3) bei größeren Distanzen (13) durch eine Auswerteeinheit (4), insbesondere mit einem Anpassen einer Bandbreite eines zur Ermittlung der Distanz (13) herangezogenen Empfangssignals an die Pulsdauer (T1,T2,T3).

15. Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 9 bis 13, wobei der Programmcode eine Variation einer maximalen Messdistanz des optoelektronischen Entfernungsmessverfahrens (99) durch Einstellung einer Pulsdauer (T1,T2,T3) einer pulsförmig emittierten optischen Strahlung durchführt und auch eine Bandbreitenanpassung des Empfangssignals beim ermitteln der Distanz durchführt, speziell wenn der Programmcode in einer Auswerteeinheit (4) eines optoelektronischen Entfernungsmessers (99) nach einem der Ansprüche 1 bis 8 ausgeführt wird.

**Claims**

1. Opto-electronic distance measuring device (99), in particular a laser distance measuring device, having:

    • a transmitting unit having a driver stage (5) for a light source (6), in particular a semiconductor light source, for emitting optical pulses as pulsed-mode-intensity-modulated optical radiation (10),
    • a receiving unit for receiving a portion (12) of the optical radiation (10), said portion being reflected from a target object (11), and converting it into an electrical reception signal, by means of a photosensitive electrical component (1), in particular a photodiode,
    • an analogue-digital converter (3) for digitizing the reception signal, and
    • an electronic evaluation unit (4) which is designed in such a way that a distance (13) from the target object (11) is ascertainable on the basis of a signal propagation time using the digitized reception signal,

    **characterized in that**
    the driver stage (5) is designed in such a way that at least two pulse durations (T1, T2, T3) of different length for the optical pulses can be set, in particular wherein extension of the pulse duration (T1, T2, T3) allows expansion of a distance measurement range, as a maximum ascertainable distance (13), to be achieved,

and wherein the electronic evaluation unit (4) is designed in such a way that the setting of the pulse duration (T1, T2, T3) is taken as a basis for using a configurable filter to set a bandwidth for the reception signal, wherein extension of the pulse duration (T1, T2, T3) involves reduction of the bandwidth with a lowering of an upper cutoff frequency for a low-pass-filter characteristic of the filter.

2. Opto-electronic distance measuring device (99) according to Claim 1, **characterized in that** the configurable filter is embodied as a digital configurable filter and the reception signal is a digitized reception signal.

3. Opto-electronic distance measuring device (99) according to any one of Claims 1 and 2, **characterized in that** the distance measuring device provides a first mode of operation having a first pulse duration (T1, T2, T3) and at least one second mode of operation having a second pulse duration (T1, T2, T3), wherein the first pulse duration is shorter than the second, in particular wherein one of the modes of operation can be selected by a user.

4. Opto-electronic distance measuring device (99) according to any one of Claims 1 to 3, **characterized in that** the transmitting unit is designed in such a way that the pulse duration (T1, T2, T3) is set on the basis of an at least coarsely ascertained or estimated distance (13) from the target object (11), in particular wherein the distance measuring device (99) is designed in such a way that the pulse duration is set to be longer for long distances than for short distances, specifically wherein a distance threshold being exceeded by the ascertained distance (13) automatically involves extension of the pulse duration in comparison with that for a distance (13) below the distance threshold.

5. Opto-electronic distance measuring device (99) according to Claims 1 to 4, **characterized in that** the driver stage (5) is a pulse output stage which is designed in such a way that the pulse duration (T1, T2, T3) can be set variably independently of a pulse amplitude of the optical pulses, in particular wherein prescribed values of the pulse amplitude and of the pulse duration (T1, T2, T3) can each be set independently of one another.

6. Opto-electronic distance measuring device (99) according to any one of Claims 1 to 5, **characterized in that** the driver stage has a switchable capacitor for storing a pulse energy, wherein by switching the capacitor the pulse duration (T1, T2, T3) can be set.

7. Observation apparatus (19) having a distance measuring device (99) according to any one of Claims 1 to 6, having a targeting device for sighting the target object, wherein an optical axis (34) of the targeting device points in the same direction as an optical axis of the distance measuring device (99),
in particular wherein the observation apparatus (19) is designed in such a way that a first mode "high distance accuracy" or a second mode "long measurement distance" of the distance measuring device can be selected using respective different pulse durations (T1, T2, T3).

8. Observation apparatus (19) according to Claim 7, which has an automatic mode which is designed in such a way that the variable setting of the pulse duration (T1, T2, T3) takes place automatically in accordance with a characteristic of the reception signal, in particular in accordance with an evaluatability of reception pulses in the reception signal and a signal-to-noise ratio that can be achieved therefor.

9. Distance measuring method comprising:

   • emission of pulsed-mode-amplitude-modulated optical radiation (10), in particular laser light,
   • reception of a portion of the optical radiation, said portion being reflected from a target object (11), by means of a photosensitive electrical component (1) which converts the received optical radiation (12) into an electrical reception signal,
   • digitization of the reception signal by means of an analogue-digital converter (3), and
   • ascertainment of a distance (13) from the target object (11) on the basis of a signal propagation time by an evaluation of the digitized reception signal by means of an electronic evaluation unit (4), **characterized in that**

   one of at least two adjustable pulse durations (T1, T2, T3) of different length for the optical radiation is selected, which allows a maximum value for the ascertainable distance to be altered, particularly wherein extension of the pulse duration (T1, T2, T3) increases the maximum value,
   and wherein the distance is ascertained by means of configurable filtering of the reception signal, which filtering is configured in accordance with the set pulse duration in such a way that a bandwidth for the reception signal is matched to the set pulse duration (T1, T2, T3) and
   the bandwidth is decreased towards longer pulse durations (T1, T2, T3), wherein extension of the pulse duration (T1, T2, T3) involves lowering of an upper cutoff frequency for a low-pass-filter characteristic of the configurable filtering.

10. Distance measuring method according to Claim 9, **characterized in that**
besides the pulse duration (T1, T2, T3) being set the pulse amplitude is also set, in particular wherein the pulse duration and the pulse amplitude can each be set independently of one another.

11. Distance measuring method according to any one of Claims 9 to 10, **characterized in that** the pulse duration (T1, T2, T3) is set on the basis of the distance (13), particularly wherein a longer pulse duration (T1, T2, T3) is set for a distant target object (11) at a relatively long distance than for a close target object (11) at a shorter distance.

12. Distance measuring method according to Claim 11, **characterized in that**
the set pulse duration (T1, T2, T3) is automatically matched to the ascertained distance (13), in particular wherein the pulse duration (T1, T2, T3) is extended as distance (13) increases, specifically wherein the pulse amplitude is kept constant.

13. Distance measuring method according to any one of Claims 9 to 12, **characterized in that** a selection is made between

   • a first mode "accurate measurement" with emission of the optical pulses with a shorter pulse duration (T1, T2, T3) than in
   • at least one second mode "long measurement" with emission of the optical pulses with a longer pulse duration (T1, T2, T3) than in the first mode.

14. Method for flexibly matching a distance resolution capability of an optoelectronic distance measuring device (99) according to any one of Claims 1 to 8 on the basis of distance, comprising matching of a pulse duration (T1, T2, T3) of an emitted optical transmission signal (10) from the distance measuring device (99) on the basis of an ascertained or ascertainable distance (13), in particular comprising automatic extension of the pulse duration (T1, T2, T3) for relatively long distances (13) by means of an evaluation unit (4), in particular comprising matching of a bandwidth of a reception signal, which is used for ascertaining the distance (13), to the pulse duration (T1, T2, T3) .

15. Computer program product having program code, which is stored on a machine-readable storage medium, or computer data signal, embodied by an electromagnetic wave, for carrying out the method according to any one of Claims 9 to 13, wherein the program code varies a maximum measurement distance of the optoelectronic distance measuring method (99) by setting a pulse duration (T1, T2, T3) for optical radiation emitted in pulsed fashion and also performs bandwidth matching for the reception signal when ascertaining the distance, specifically when the program code is executed in an evaluation unit (4) of an optoelectronic distance measuring device (99) according to any one of Claims 1 to 8.

**Revendications**

1. Distancemètre optoélectronique (99), notamment télémètre laser, comportant :

   • un émetteur possédant un étage de commande (5) pour une source lumineuse (6), notamment une source lumineuse semi-conductrice, destiné à émettre des impulsions optiques constituant un rayonnement optique (10) modulé en intensité sous forme d'impulsions,
   • un récepteur destiné à recevoir une partie (12) du rayonnement optique (10) renvoyée par un objet cible (11) et à la transformer en un signal électrique de réception au moyen d'un composant électrique photosensible (1), notamment une photodiode,
   • un convertisseur analogique-numérique (3) destiné à numériser le signal de réception, et
   • une unité électronique d'évaluation (4), conçue de manière à pouvoir déterminer une distance (13) par rapport à l'objet cible (11) en se fondant sur la durée de propagation du signal compte tenu du signal de réception numérisé,

   **caractérisé en ce que**
   l'étage de commande (5) est conçu de manière à pouvoir régler les impulsions optiques sur au moins deux durées d'impulsion de longueurs différentes (T1, T2, T3),
   un allongement de la durée d'impulsion (T1, T2, T3) ayant notamment pour effet d'augmenter la portée de la mesure de distance, c'est-à-dire la distance (13) maximale mesurable,
   et l'unité électronique d'évaluation (4) étant conçue de telle manière que le réglage de la durée d'impulsion (T1, T2, T3) a pour effet de régler une bande passante du signal de réception au moyen d'un filtre configurable,
   un allongement de la durée d'impulsion (T1, T2, T3) ayant pour effet de réduire la largeur de bande en abaissant une limite supérieure de fréquence d'une caractéristique passe-bas du filtre.

2. Distancemètre (99) selon la revendication 1, **caractérisé en ce que**
   le filtre configurable est réalisé sous la forme d'un filtre configurable numérique et le signal de réception est un signal de réception numérique.

3. Distancemètre (99) selon l'une des revendications 1 ou 2, **caractérisé en ce que**
   le distancemètre offre un premier mode de fonctionnement avec une première durée d'impulsion (T1, T2, T3) et au moins un deuxième mode de fonctionnement avec une deuxième durée d'impulsion (T1, T2, T3), la première durée d'impulsion étant plus courte que la deuxième, un utilisateur pouvant notamment choisir l'un des modes de fonctionnement.

4. Distancemètre (99) selon l'une des revendications 1 à 3, **caractérisé en ce que**
   l'émetteur est conçu de telle manière que le réglage de la durée d'impulsion (T1, T2, T3) s'effectue en fonction d'une distance (13) par rapport à l'objet cible (11) déterminée ou estimée au moins grossièrement, le distancemètre (99) étant notamment conçu de telle manière que la durée d'impulsion pour les grandes distances est réglée à une valeur plus grande que celle pour les petites distances, le dépassement d'un seuil de distance par la distance obtenue (13) provoquant spécialement un allongement automatique de la durée d'impulsion par rapport à celle du cas où la distance (13) est inférieure au seuil de distance.

5. Distancemètre (99) selon l'une des revendications 1 à 4, **caractérisé en ce que**
   l'étage de commande (5) est un étage de sortie d'impulsion, conçu de telle manière que la durée d'impulsion (T1, T2, T3) peut être réglée de manière variable indépendamment d'une amplitude d'impulsion des impulsions optiques,
   des valeurs prédéfinies de l'amplitude d'impulsion et de la durée d'impulsion (T1, T2, T3) pouvant notamment être réglées de manière indépendante les unes des autres.

6. Distancemètre (99) selon l'une des revendications 1 à 5, **caractérisé en ce que**
   l'étage de commande possède, pour le stockage d'une énergie d'impulsion, un condensateur commutable dont la commutation permet de régler la durée d'impulsion (T1, T2, T3).

7. Appareil d'observation (19) pourvu d'un distancemètre (99) selon l'une des revendications 1 à 6, possédant un dispositif viseur permettant de viser l'objet cible, un axe optique (34) du dispositif viseur étant dirigé dans le même sens qu'un axe optique du distancemètre (99), l'appareil d'observation (19) étant notamment conçu de telle manière qu'il est possible de choisir un premier mode « grande précision de la distance » ou un deuxième mode « grande distance mesurée » du distancemètre, disposant chacun de durées d'impulsion (T1, T2, T3) différentes.

8. Appareil d'observation (19) selon la revendication 7, offrant un mode automatique conçu de telle manière que le réglage variable de la durée d'impulsion (T1, T2, T3) s'effectue automatiquement selon une caractéristique du signal de réception, notamment selon une évaluabilité des impulsions de réception dans le signal de réception et selon un rapport signal sur bruit ainsi atteignable.

9. Procédé de mesure de distance comprenant :

   • l'émission d'un rayonnement optique (10) modulé en amplitude sous forme d'impulsions, notamment de lumière laser,
   • la réception d'une partie du rayonnement optique, renvoyée par un objet cible (11), par un composant électrique photosensible (1) qui transforme le rayonnement optique reçu (12) en un signal électrique de réception,
   • la numérisation du signal de réception par un convertisseur analogique-numérique (3), et
   • la détermination d'une distance (13) par rapport à l'objet cible (11) en se fondant sur la durée de propagation du signal, compte tenu de l'évaluation du signal de réception numérisé au moyen d'une unité électronique d'évaluation (4),

   **caractérisé en ce que**
   il est choisi une durée d'impulsion du rayonnement optique parmi au moins deux durées d'impulsion (T1, T2, T3) réglables et de longueurs différentes, ce choix permettant de modifier une valeur maximale de la distance déterminable,
   un allongement de la durée d'impulsion (T1, T2, T3) provoquant notamment une augmentation de la valeur maximale,
   et la distance étant déterminée par un filtrage configurable du signal de réception, ce filtrage étant configuré selon la valeur réglée de la durée d'impulsion de telle manière que la largeur de bande du signal de réception s'adapte à la valeur réglée de la durée d'impulsion (T1, T2, T3), et la largeur de bande étant réduite pour des durées d'impulsion (T1, T2, T3) plus grandes, un allongement de la durée d'impulsion (T1, T2, T3) ayant pour effet d'abaisser une limite supérieure de fréquence d'une caractéristique passe-bas du filtre configurable.

10. Procédé de mesure de distance selon la revendication 9, **caractérisé en ce que**
    il s'effectue un réglage non seulement de la durée d'impulsion (T1, T2, T3) mais aussi de l'amplitude d'impulsion, la durée d'impulsion et l'amplitude d'impulsion étant notamment réglables de manière indépendante l'une de l'autre.

11. Procédé de mesure de distance selon l'une des revendications 9 à 10, **caractérisé en ce que**
    le réglage de la durée d'impulsion (T1, T2, T3) est fonction de la distance (13), une durée d'impulsion (T1, T2, T3) plus longue étant notamment réglée pour un objet cible (11) éloigné à plus grande distance que pour un objet cible (11) proche à plus petite distance.

12. Procédé de mesure de distance selon la revendication 12, **caractérisé en ce que**
    la valeur réglée de la durée d'impulsion (T1, T2, T3) s'adapte automatiquement à la distance (13) déterminée, une augmentation de la distance (13) provoquant un allongement de la durée d'impulsion (T1, T2, T3), l'amplitude d'impulsion étant spécialement maintenue constante.

13. Procédé de mesure de distance selon l'une des revendications 9 à 12, **caractérisé en ce que** il est choisi entre

    ■ un premier mode « mesure précise » avec une émission des impulsions optiques de durée d'impulsion (T1, T2, T3) plus courte que dans
    ■ au moins un deuxième mode « mesure de longue distance » avec une émission des impulsions optiques de durée d'impulsion (T1, T2, T3) plus longue que dans le premier mode.

14. Procédé d'adaptation, souple et selon la distance, du pouvoir de résolution de la distance d'un distancemètre optoélectronique (99) selon l'une des revendications 1 à 8, comportant une adaptation de la durée d'impulsion (T1, T2, T3) d'un signal d'émission optique (10) issu du distancemètre (99) en fonction d'une distance (13) déterminée ou à déterminer, comportant notamment un allongement automatique de la durée d'impulsion (T1, T2, T3) pour les plus grandes distances (13) au moyen d'une unité d'évaluation (4), comportant notamment une adaptation d'une largeur de bande d'un signal de réception, servant à la détermination de la distance (13), en fonction de la durée d'impulsion (T1, T2, T3).

15. Produit logiciel, comportant un code logiciel enregistré sur un support lisible par une machine, ou bien signal de données informatiques, matérialisé par une onde électromagnétique, pour l'exécution du procédé selon l'une des revendications 9 à 13, dans lequel le code logiciel provoque une variation d'une distance de mesure maximale du procédé de mesure de distance optoélectronique (99) grâce au réglage d'une durée d'impulsion (T1, T2, T3) d'un rayonnement optique émis sous forme d'impulsions et grâce à une adaptation de la largeur de bande du signal de réception lors de la détermination de la distance, spécialement lorsque le code logiciel est exécuté dans une unité d'évaluation (4) d'un distancemètre optoélectronique (99) selon l'une des revendications 1 à 8.

*Fig. 1*

*Fig. 2*

Signal

T1

84A

84C

81    82    t

*Fig. 3a*

Signal

T1

84A

84B

84C

81    82

t

*Fig. 3b*

Signal

84

T1

74

T2

75

81

81L

81H

82

82H

82L

t

*Fig. 4*

Signal

73

71

85

81

82

T2

T1

74

85H

75

81H

81L

82L

t

*Fig. 5*

Signal

T1

T2

T3

84

81

82

83

t

*Fig. 6*

Signal

T1

T2

T3

80

84A

84B

84C

81A

81B

81C

82

83

t

*Fig. 7*

Fig. 8

Fig. 9

Fig. 10

Fig. 11

5A

S1    S2    S3

U    C1    C2    LD    *Fig. 12*

5B

S1    S3

S2    D

U    C2    C1    LD    *Fig. 13*

5C

L    S1

U    S2    S3    C2    C1    LD    D    *Fig. 14*

5D

S4    S5

U    C1    C2    C3    LD

S1    S2    S3    *Fig. 15*

5E

S3

U    Z    C>>    LD    *Fig. 16*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006063740 A
- WO 2007022927 A
- WO 9722179 A
- DE 2331084
- DE 19943127
- US 3628048 A
- US 2009273770 A